(19) **Europäisches Patentamt / European Patent Office / Office européen des brevets**

(11) **EP 3 425 711 A1**

(12) **EUROPEAN PATENT APPLICATION**
published in accordance with Art. 153(4) EPC

(43) Date of publication:
**09.01.2019 Bulletin 2019/02**

(21) Application number: **17759481.9**

(22) Date of filing: **24.01.2017**

(51) Int Cl.:
**H01M 4/92** (2006.01)     **B01J 23/44** (2006.01)
**B01J 35/08** (2006.01)     **H01M 4/86** (2006.01)
**H01M 8/10** (2016.01)

(86) International application number:
**PCT/JP2017/002386**

(87) International publication number:
**WO 2017/150009 (08.09.2017 Gazette 2017/36)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **29.02.2016 JP 2016037609**

(71) Applicant: **N.E. Chemcat Corporation**
**Tokyo 105-6124 (JP)**

(72) Inventors:
• **MIZUSAKI Tomoteru**
  **Bando-shi**
  **Ibaraki 306-0608 (JP)**

• **NAKAMURA Yoko**
  **Bando-shi**
  **Ibaraki 306-0608 (JP)**
• **NAGAMORI Kiyotaka**
  **Bando-shi**
  **Ibaraki 306-0608 (JP)**
• **IGARASHI Hiroshi**
  **Bando-shi**
  **Ibaraki 306-0608 (JP)**
• **SEKI Yasuhiro**
  **Bando-shi**
  **Ibaraki 306-0608 (JP)**

(74) Representative: **Gill, Stephen Charles et al**
  **Mewburn Ellis LLP**
  **City Tower**
  **40 Basinghall Street**
  **London EC2V 5DE (GB)**

(54) **CATALYST FOR ELECTRODE, COMPOSITION FOR FORMING GAS DIFFUSION ELECTRODE, GAS DIFFUSION ELECTRODE, MEMBRANE ELECTRODE ASSEMBLY, AND FUEL CELL STACK**

(57) To provide electrode catalyst which has the catalyst activity and durability equal to or more than the Pt / Pd / C catalyst. The electrode catalyst has a support and catalyst particles supported on the support. The catalyst particle has the core part formed on the support and the shell part formed on the core part. The core part contains a Ti oxide and Pd, and the shell part contains Pt.

FIG.1

10  Electrode catalyst
6  Shell part
4  Core part
3  Catalyst particle
2  Support

**Description**

TECHNICAL FIELD

The present invention relates to an electrode catalyst. Particularly, the present invention relates to an electrode catalyst suitable usable for a gas diffusion electrode, more suitably usable for a gas diffusion electrode of a fuel cell.
Also, the present invention relates to a composition for forming a gas diffusion electrode including the electrode catalyst particles, a membrane-electrode assembly, and a fuel cell stack.

BACKGROUND ART

A solid polymer electrolyte fuel cell (Polymer Electrolyte Fuel Cell: hereinafter called "PEFC" as needed) has been developed as electric power source of a fuel cell vehicle, a home cogeneration system, and the like.
As a catalyst used for the gas diffusion electrode of PEFC, a noble metal catalyst composed of a noble metal of platinum group elements such as platinum (Pt).
For example , as a typical conventional catalyst, there has been known "Pt on carbon catalyst" (hereinafter called "Pt/C catalyst" as needed) (for example, Pt/C catalyst having a Pt support rate of 50 wt%, Trade Name: "NE-F50" available from N.E.CHEMCAT).
In the production costs of PEFC, a proportion of the noble metal catalyst such as Pt is large, and it is the problem to lower the PEFC cost and to spread PEFC.
To solve the problem, developments of technique for lowering the noble metal in the catalyst, or technique for de-noble metalizing have been progressed.
Among these developments, in order to reduce the amount of platinum to be used, a catalyst particle having a core-shell structure formed by a core part made of non-platinum element and a shell part made of Pt (hereinafter called "core-shell catalyst particle" as needed) has been studied, and there are many reports.
For example, in Patent Document 1, there is disclosed a particle composite material (core-shell catalyst particle) having a structure where palladium (Pd) or a Pd alloy (corresponding to the core part) is covered with an atomic thin layer of Pt atom (corresponding to shell part). Further in Example of this Patent Document 1, a core-shell catalyst particle where the core part is a Pd particle and the shell part is a layer made of Pt is described.
In addition, there has been studied a structure where a metal element other than the Pt group is contained as the structural element of the core part.
For example, there has been proposed a structure where a Ti oxide is contained as the structural element of the core part (for example, Patent Documents 2 to 5).
In Patent Document 2, there is disclosed a synthesis example of a catalyst having a structure that particles where a core part is TiO2 and a shell part is an alloy of a reduced product of TiO2 (TiO2-y, $0 < y \leq 2$) and Pt are supported on a carbon support (Patent Document 2, Example 10).
In Patent Document 3, there is disclosed a platinum-metal oxide composite particle where a core part is made of a Ti oxide and a shell part is made of Pt, etc. (Patent Document 3, Paragraph 0010).
In Patent Document 4, there is disclosed catalyst particles having a structure where an inside core (core part) which contains Pd (Pd of zero valent metal state), an alloy of Pd and a noble metal selected from other group of noble metals, a mixture thereof, and a ceramic material such as titania (TiO2), and an outer shell (shell part) of Pt, an alloy of Pt, or the like (for example, Patent Document 4, Paragraphs 0026 and 0027).
In Patent Document 5, there is proposed a catalyst for a fuel cell having a structure where an inside particle (core part) of a Ti oxide and a Pt-containing outermost layer (shell part) which covers at least a part of the surface of the inside particle (for example, Patent Document 5, Fig.1, Paragraphs 0031 to 0039). Further in Reference Example 3 of Patent Document 5, there is described that the presence of platinum on the crystalline TiO2 could be acknowledged by measuring according to High-Angle Annular Dark-Field (hereinafter, sometimes referred to as "HAADF"), and measuring according to Energy Dispersive X-ray Spectroscopy (hereinafter sometimes referred to as "EDS") (for example, Patent Document 5, Paragraph 0116, Fig.4, Fig.5).
Incidentally, the present applicant submits, as publications where the above-mentioned publicly-known inventions are described, the following publications:

PRIOR ART DOCUMENT

Patent Document

## EP 3 425 711 A1

Patent Document 1: US Un-examined Patent Application Publication No. 2007/31722
Patent Document 2 : Japanese Un-examined Patent Application Publication No. 2012-143753
Patent Document 3: Japanese Un-examined Patent Application Publication No. 2008-545604
Patent Document 4: Japanese Un-examined Patent Application Publication No. 2010-501345
Patent Document 5: Japanese Un-examined Patent Application Publication No. 2012-081391

SUMMARY OF THE INVENTION

Problem to be solved by the invention

However, with respect to an electrode catalyst for a fuel cell which contains a support and catalyst particles having a core-shell structure supported on the support, when researching the aforementioned prior arts from the viewpoint of electrode catalysts having a Ti oxide (particularly $TiO_2$) and Pd (Pd of zero valent metal state) as a core part containing mainly a structural component, the present inventors have found that there are improvement because study and working examples were not enough with respect to the structure to obtain catalyst having activity and durability higher than or equal to the Pt / Pd / C catalyst in addition to the reduction of the Pt amount to be used.

Namely, in Patent Document 2, Patent Document 3 and Patent Document 5 where the structure having a core part containing a Ti oxide (particularly $TiO_2$) and Pd (Pd of zero valent metal state) as a core part containing mainly a structural component is not specifically discussed.

Further, in Patent Documents 4 where the structure having a core part containing Pd, titania ($TiO_2$) is disclosed, there is no working example corresponding to a catalyst having a core part containing Pd, titania ($TiO_2$), actual proof as to catalyst activity and durability is not obtained.

More specifically, in Patent Document 4, when represented by "shell part / core part", the described and evaluated working examples only have structures of "Pt / Ag" (Patent Document 4, Example 1, Example 4), and "Pt / Au" (Patent Document 4, Example 2, Example 3). As to the evaluation of performance, there is only described that "in the electrochemical test by RDE (Rotating ring Disk Electrode), a high relative activity could be obtained", it is not clear in detail what degree of the activity improvement could be obtained.

The present invention has been completed under the technical background, and is to provide an electrode catalyst which has catalyst activity and durability higher than or equal to the Pt / Pd / C catalyst and contributes to lowering of the cost.

Further, the present invention is to provide a composition for forming a gas diffusion electrode including the electrode catalyst particles, a gas diffusion electrode, a membrane-electrode assembly (MEA), and a fuel cell stack.

Means to solve the problems

In a case that a Ti oxide (particularly $TiO_2$) is used as a component of a core part in order to reduce the Pt amount to be used, the present inventors have intensively studied a possible structure which can give catalyst activity and durability higher than or equal to the Pt / Pd / C catalyst.

As a result, the present inventors have found that a structure which is composed of a core part which contains at least a Ti oxide (particularly $TiO_2$) and Pd (simple Pd, i.e. Pd of zero valent metal state) and a shell part which contains Pt (Pt of zero valent metal state) as a main component, is effective, and the present invention has been completed.

More specifically, the present invention comprises the following technical elements.

Namely, according to the present invention, there can be provided

(N1) an electrode catalyst comprises:

an electrically conductive support, and
catalyst particles supported on the support,
wherein

the catalyst particle comprises a core part formed on the support, and a shell part formed on the core part,
the core part contains a Ti oxide and Pd (Pd of zero valent metal state), and
the shell part contains Pt (Pt of zero valent metal state).

Though the detailed mechanism has not yet been found enough, by employing the aforementioned structure, the electrode catalyst has catalyst activity and durability higher than or equal to the Pt / Pd / C catalyst and contributes to lowering of the cost.

Here, in the present invention, the "Ti oxide" is preferably a TiO2 which is chemically stable in view of obtaining the present effects more reliably.

In the instant description, when explaining the structure of the electrode catalyst, if necessary, the wording "structure (main structural material) of the catalyst particle supported on a support / structure (main structural material) of a support having electric conductivity" is employed.

More specifically, the wording "structure of shell part / structure of core part / structure of support" is employed. Furthermore specifically, when the catalyst particle has a structure further having an intermediate shell part between the core part and the shell part, the wording "structure of shell part / structure of intermediate shell part / structure of core part / structure of support" is employed.

For instance, when the electrode catalyst has a structure of "shell part of Pt, core part of Ti oxide and Pd as main components, support of electrically conductive carbon", the wording "Pt / Pd + TiOx / C" is employed. Further, when the structure of the electrode catalyst is a structure of "shell part of Pt, intermediate shell part of Pd, core part of Ti oxide and Pd as main components, support of electrically conductive carbon", the wording "Pt / Pd / Pd + TiOx / C" is employed. Here, "x" of the "$TiO_2$" represents a stoichiometric coefficient of O atom to the Ti atom.

Further, in the present invention, the "state of core part where the Ti oxide and Pd are main components" means the state where a total amount (mass %) of the Ti oxide component and the Pd component (Pd of zero valent metal state) contained in the structural components of the core is largest. Further, in the "state of core part where the Ti oxide and Pd are main components", the total percentage of the Ti oxide component and the Pd component contained in the structural components of the core is preferably 50 % by mass or more, more preferably 80 % by mass or more, further preferably 90 % by mass or more.

Further, it is preferable that the electrode catalyst described in the (N1) according to the present invention has (N2) a percentage $R1_{Pt}$ (atom %) of the Pt, a percentage $R1_{Pd}$ (atom %) of the Pd and a percentage $R1_{Ti}$ (atom %) of the Ti derived from the Ti oxide in an analytical region near a surface measured by X-ray photoelectron spectrum analysis (XPS) satisfy the conditions of the following equation (1).

$$0.15 \leq \{R1_{Ti} / (R1_{Pt} + R1_{Pd} + R1_{Ti})\} \leq 0.75 \qquad (1)$$

The present inventors have found that the effects of the present invention can be obtained more reliably, when employing the structure where the chemical composition of the analytical region of the catalyst particle of the electrode catalyst near a surface measured by the XPS satisfies the conditions of the equation (1) (structure where the percentage of the Ti oxide is relatively large).

Though the detailed mechanism has not yet been found enough, the present inventors assume that the reduction reaction of oxygen on the Pt of the shell part of the catalyst particle can be promoted when the Ti oxide which satisfies the equation (1) exists on or near the surface of the catalyst particle. For instance, it is assumed that when the Ti oxide exists near the Pt of the shell part, the water produced by the reduction reaction of oxygen on the Pt moves smoothly from the Pt to the Ti oxide side, which promotes the reduction reaction of oxygen.

When the $\{R1_{Ti} / (R1_{Pt} + R1_{Pd} + R1_{Ti})\}$ is less than 0.15, the degree of the improving effect of the catalyst properties by adding the Ti oxide tends to be small. Further, when the $\{R1_{Ti} / (R1_{Pt} + R1_{Pd} + R1_{Ti})\}$ is more than 0.75, since a percentage of the part of the Pt having high catalyst properties decreases on the surface of the electrode catalyst, the degree of the improving effect of the catalyst properties by adding the Ti oxide tends to be small.

Here, in the present invention, from the viewpoint to improve more reliably the catalyst activity (particularly the initial Pt mass activity mentioned after) in comparison with the Pt / Pd / C, the $\{R1_{Ti} / (R1_{Pt} + R1_{Pd} + R1_{Ti})\}$ is preferably 0.15 to 0.50, more preferably 0.25 to 0.50, further preferably 0.35 to 0.50.

Further, in the present invention, from the viewpoint to improve more reliably the durability (particularly a maintaining ratio of "ECSA after evaluation test" relative to "initial ECSA before evaluation test" in the durability evaluation mentioned after) in comparison with the Pt / Pd / C, the $\{R1_{Ti} / (R1_{Pt} + R1_{Pd} + R1_{Ti})\}$ is preferably 0.15 to 0.50, more preferably 0.15 to 0.40.

According to the equation (1), when calculating the percentage $R1_{Pt}$ (atom %) of Pt, the percentage $R1_{Pd}$ (atom %) of Pd, and the percentage $R1_{Ti}$)} (atom %) of the Ti oxide by XPS, the numerical value is calculated so that the sum of the three components is 100 %. Namely, in the analytical region near a surface of the electrode catalyst, a percentage of carbon (atom %) detected other than the Pt, the Pd and the Ti oxide is omitted from the calculation.

In the present invention, XPS is measured under the following (A1) to (A6) conditions.

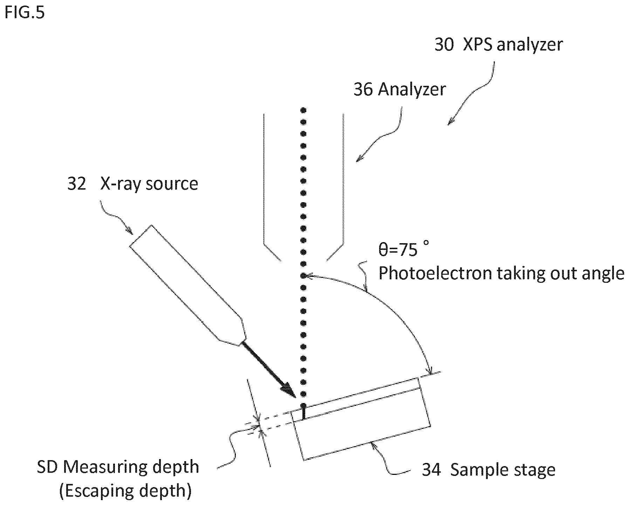

(A1) X-ray source: Monochromatic AlKa
(A2) Photoelectron taking out angle: θ=75 °C (referring the following FIG.5)
(A3) Charge correction: Correcting on the basis that C1S peak energy is 284.8 eV
(A4) Analytical region: 200 $\mu$m
(A5) Chamber pressure at analyzing: about 1 x 10$^{-6}$ Pa

Further, it is preferable that the electrode catalyst described in the (N1) according to the present invention has (N3) a percentage $R1_{Pt}$ (atom %) of the Pt and a percentage $R1_{Ti}$ (atom %) of the Ti derived from the Ti oxide in an analytical region near a surface measured by X-ray photoelectron spectrum analysis (XPS) satisfy the conditions of the following equation (2).

$$0.25 \leq \{R1_{Ti} / (R1_{Pt} + R1_{Ti})\} \leq 0.80 \qquad (2)$$

The present inventors have found that the effects of the present invention can be obtained more reliably, when employing the structure where the chemical composition of the analytical region of the catalyst particle of the electrode catalyst near a surface measured by the XPS satisfies the conditions of the equation (2) (structure where the percentage of the Ti oxide relative to the Pt is relatively large).

Though the detailed mechanism has not yet been found enough, the present inventors assume that the reduction reaction of oxygen on the Pt of the shell part of the catalyst particle can be promoted when the Ti oxide which satisfies the equation (2) exists on or near the surface of the catalyst particle. For instance, it is assumed that when the Ti oxide exists near the Pt of the shell part, the water produced by the reduction reaction of oxygen on the Pt moves smoothly from the Pt to the Ti oxide side, which promotes the reduction reaction of oxygen.

When the $\{R1_{Ti} / (R1_{Pt} + R1_{Ti})\}$ is less than 0.25, the degree of the improving effect of the catalyst properties by adding the Ti oxide tends to be small. Further, when the $\{R1_{Ti} / (R1_{Pt} + R1_{Ti})\}$ is more than 0.80, since a percentage of the part of the Pt having high catalyst properties decreases on the surface of the electrode catalyst, the degree of the improving effect of the catalyst properties by adding the Ti oxide tends to be small.

Here, in the present invention, from the viewpoint to improve more reliably the catalyst activity (particularly the initial Pt mass activity mentioned after) in comparison with the Pt / Pd / C, the $\{R1_{Ti} / (R1_{Pt} + R1_{Ti})\}$ is preferably 0.25 to 0.60, more preferably 0.35 to 0.60, further preferably 0.50 to 0.60.

Further, in the present invention, from the viewpoint to improve more reliably the durability (particularly a maintaining ratio of "ECSA after evaluation test" relative to "initial ECSA before evaluation test" in the durability evaluation mentioned after) in comparison with the Pt / Pd / C, the $\{R1_{Ti} / (R1_{Pt} + R1_{Ti})\}$ is preferably 0.25 to 0.60, more preferably 0.25 to 0.55.

Here, according to the equation (2), when calculating the percentage $R1_{Pt}$ (atom %) of Pt and the percentage $R1_{Ti}$ (atom %) of the Ti oxide by XPS, the numerical value is calculated so that the sum of the three components which further includes the percentage $R1_{Pd}$ (atom %) of Pd is 100 %. Namely, in the analytical region near a surface of the electrode catalyst, a percentage of carbon (atom %) detected other than the Pt, the Pd and the Ti oxide is omitted from the calculation.

In the equation (2), XPS is also measured under the aforementioned (A1) to (A6) conditions.

Further, it is preferable that the electrode catalyst described in the (N2) or (N3) according to the present invention has

(N4) the $R1_{Pt}$ in the equation (1) or the equation (2) is 19 atom % or more.

Thereby, as to the electrode catalyst described in the (N2) or (N3), since a percentage of the part of the Pt having high catalyst properties on the surface of the electrode catalyst can be sufficiently obtained, the effects of the present invention can be obtained more reliably.

Further, from the same point of view, the $R1_{Pt}$ is more preferably 30 atom % or more, further preferably 30 atom % to 47 atom %.

Further, it is preferable that the electrode catalyst described in the (N2) or (N4) according to the present invention has

(N5) the percentage $R1_{Pd}$ of Pd in the equation (1) is 36 atom % or less.

Thereby, as to the electrode catalyst described in the (N2) or (N4), since a percentage of the part of the Pd on the surface of the electrode catalyst tends to be decreased more, it is possible to inhibit elution of Pd more reliably. Therefore, the effects of the present invention can be obtained more reliably, for example, by increasing the durability (particularly a maintaining ratio of "ECSA after evaluation test" relative to "initial ECSA before evaluation test" in the durability evaluation mentioned after) more.

Further, from the viewpoint of obtaining sufficient catalyst properties of the Pt part of the shell part, it is preferable that the core part contains a sufficient amount of Pd, and from this point of view, the $R1_{Pd}$ is preferably 9 atom % to 36 atom %, more preferably 17 atom % to 36 atom %.

Further, from the viewpoint of obtaining the effects of the present invention more reliably, it is preferable that in the electrode catalyst described in any one of the (N2) to (N5) according to the present invention,

(N6) the $R1_{Ti}$ in the equation (1) or the equation (2) is 18 atom % to 71 atom %. Further, from the same point of view, the $R1_{Ti}$ is more preferably 18 atom % to 50 atom %.

Further, it is preferable that in the electrode catalyst described in any one of the (N1) to (N6) according to the present invention,
(N7) a support rate $L_{Ti}$ (wt %) of Ti derived from the Ti oxide measured by ICP light emission analysis is 4.7.wt % or more.

By configuring the electrode catalyst in such a manner, the amount to be used of Pd of the core part can be also decreased, which results in contribution to low cost. On the other hand, from the viewpoint of ensuring electron conductivity of the catalyst particle easily, the support rate $L_{Ti}$ (wt %) of the Ti oxide is preferably 9.5 wt % or less, more preferably 9.0 wt % or less.

Further, it is preferable that in the electrode catalyst described in any one of the (N1) to (N7) according to the present invention,
(N8) a support rate $L_{Pt.}$ (wt %) of Pt and a support rate $L_{Pd}$ (wt %) of Pd measured by ICP light emission analysis satisfy the conditions of the following equation (3).

$$L_{Pt} / L_{Pd} \geq 0.30 \qquad (3)$$

By configuring the electrode catalyst so as to satisfy the equation (3), the amount to be used of Pd of the core part can be also decreased, which results in contribution to low cost.

Further, it may be possible that in the electrode catalyst described in any one of the (N1) to (N8) according to the present invention,
(N9) the catalyst particles has an intermediate shell part disposed between the core part and the shell part, and the intermediate shell part contains Pd (Pd of zero valent metal state).

In case that the intermediate shell part which contains Pd (preferably contains Pd as a main component) is disposed between the core part and the shell part, at the time when the shell part is formed on the intermediate shell part, the known UPD (Under Potential Deposition) method can be employed, it is preferable that the shell part can be formed relatively easily on the intermediate shell part in a good covering manner.

Since the lattice constant of Pd (3.89 angstroms)is near the lattice constant of Pt (3.92 angstroms), it is expected that the Pt of the shell part can be formed in a relatively stable manner on the intermediate shell part. Further, since the core part and the intermediate shell part contain Pd as the same component, it is preferable that the affinity between the core part and the intermediate shell part is relatively good.

Furthermore, it may be possible that in the electrode catalyst described in any one of the (N1) to (N9) according to the present invention,
(N10) the Ti oxide is exposed on a part of the surface of the catalyst particle.

In this case, since the Ti oxide exists near the Pt of the shell part on the surface of the catalyst particle, the effects of the present invention can be achieved.

Further, it is preferable that in the electrode catalyst described in any one of the (N1) to (N9) according to the present invention,
(N11) an average value of crystallite size of the crystal particle measured by powder X-ray diffraction (XRD) is 3 to 35.0 nm.

It is preferable that the average value of the crystallite size is 3 nm or more, since there tends largely to form the particles to be the core part on the support more easily. Further, it is preferable that the average value of the crystallite size is 35.0 nm or less, since it is easy to form the particles to be the core part on the support under highly dispersing state. Further, from the same point of view, the average value of crystallite size of the crystal particle measured by powder X-ray diffraction (XRD) is preferably 3 to 20 nm, further preferably 3 nm or more and less than 20 nm.

In the present invention, in case that the intermediate shell part is made of Pt, the shell part is made of Pd and the intermediate shell part composed of one or two Pt atomic layers, since the peak of Pt(220) plane cannot be observed by XRD, the average value calculated from the peak of Pd(220) plain of the core part (or in case of the structure where the intermediate sell part is provided, the peak of Pd(220) plain of the intermediate shell part) is assumed to be an average value of the crystallite size of the catalyst particle.

In addition, the present invention provides
(N12) a composition for forming gas diffusion electrode which contains the electrode catalyst according to any one of the above (N1) to (N11).

Since the composition for forming gas diffusion electrode of the present invention contains the electrode catalyst of the present invention, it is possible to produce easily a gas diffusion electrode which has the catalyst activity (polarization property) and durability higher than or equal to the Pt / Pd / C catalyst, and contributes to the low cost.

In addition, the present invention provides
(N13) a gas diffusion electrode which comprises the electrode catalyst according to any one of the above (N1) to (N11), or which is formed by using the composition for forming gas diffusion electrode which comprises the electrode catalyst according to the above (N12).

The gas diffusion electrode of the present invention is configured by including the electrode catalyst of the present invention. Or, the gas diffusion electrode is formed by using the composition for forming gas diffusion electrode. Therefore, it is easy to produce a structure which has the catalyst activity (polarization property) and durability higher than or equal to the Pt / Pd / C catalyst, and contributes to the low cost.

In addition, the present invention provides
(N14) a membrane-electrode assembly (MEA) comprising the gas diffusion electrode according to the above (N13).

Since the membrane-electrode assembly (MEA) of the present invention includes the gas diffusion electrode of the present invention, it is easy to produce a structure which has the catalyst activity and durability higher than or equal to the MEA having the Pt / Pd / C catalyst in the gas diffusion electrode, and contributes to the low cost.

In addition, the present invention provides
(N15) a fuel cell stack comprising the membrane-electrode assembly (MEA) according to the above (N14).

Since the fuel cell stack of the present invention includes the membrane-electrode assembly (MEA) of the present invention, in comparison with the fuel cell stack which includes at least one MEA having the Pt / Pd / C catalyst in the gas diffusion electrode, it is easy to produce a structure which has the catalyst activity and durability higher than or equal to, and contributes to the low cost.

EFFECTS OF THE INVENTION

According to the present invention, the electrode catalyst which has the catalyst activity and durability higher than or equal to the Pt / Pd / C catalyst, and contributes to the low cost can be provided.

In addition, according to the present invention, there can be provided the composition for forming gas diffusion electrode, the gas diffusion electrode, the membrane-electrode assembly (MEA), and the fuel cell stack, which contain the above electrode catalyst can be provided.

BRIEF DESCRIPTION OF THE DRAWINGS

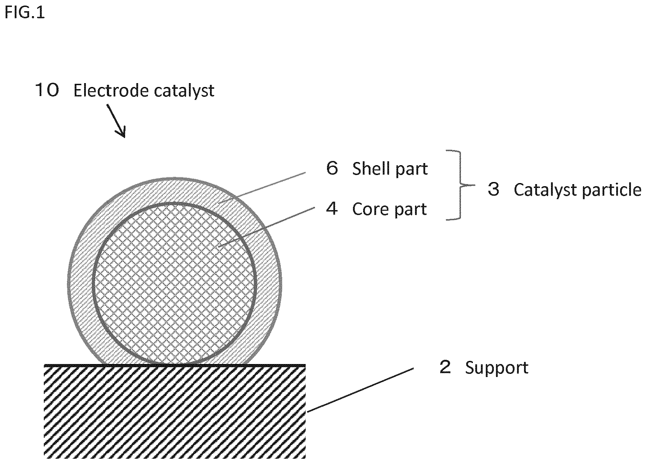

FIG.1 is a schematic sectional view showing the preferred first embodiment of the electrode catalyst of the present invention.

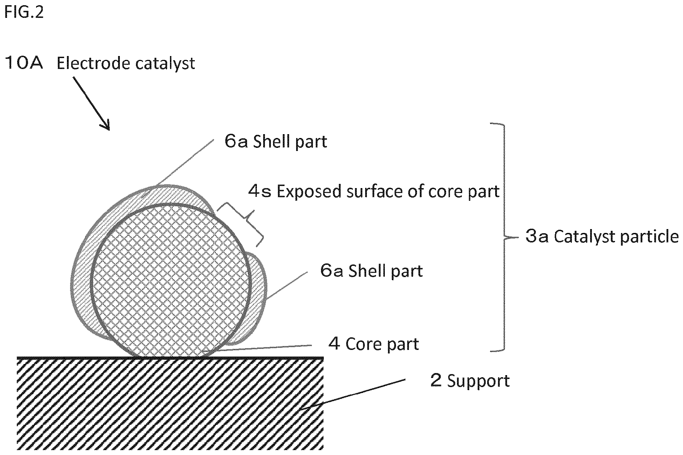

FIG.2 is a schematic sectional view showing the preferred second embodiment of the electrode catalyst of the present invention.

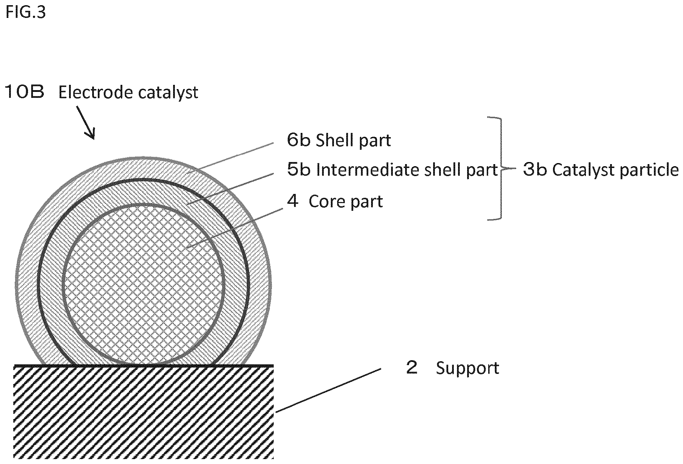

FIG.3 is a schematic sectional view showing the preferred third embodiment of the electrode catalyst of the present invention.

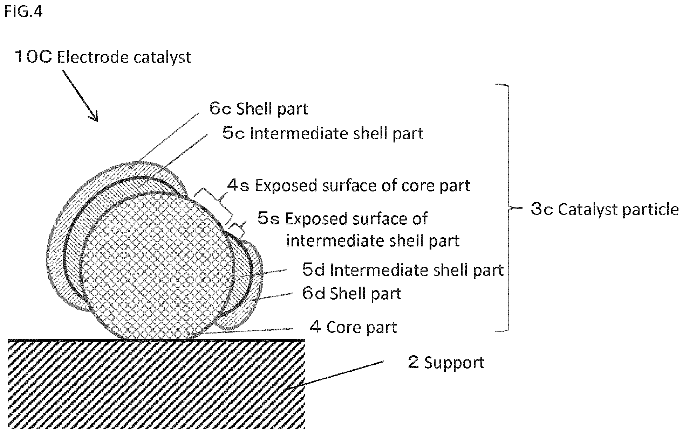

FIG.4 is a schematic sectional view showing the preferred forth embodiment of the electrode catalyst of the present invention.

FIG.5 is a schematic diagram showing a brief structure of the XPS machine to explain the analytical conditions of the X-ray photoelectron spectrum analysis (XPS) in the present invention.

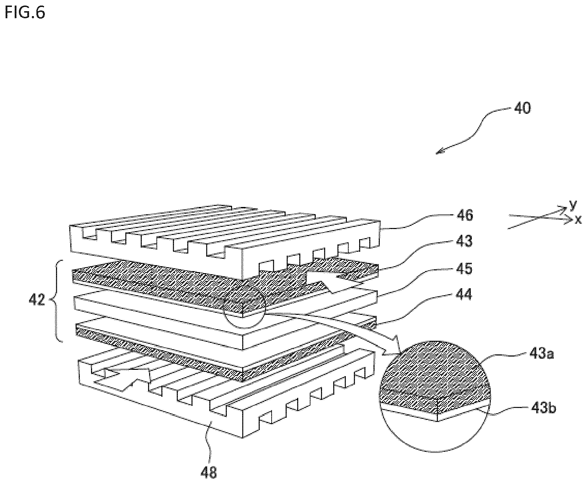

FIG.6 is a schematic diagram showing a preferred embodiment of a fuel cell stack of the present invention.

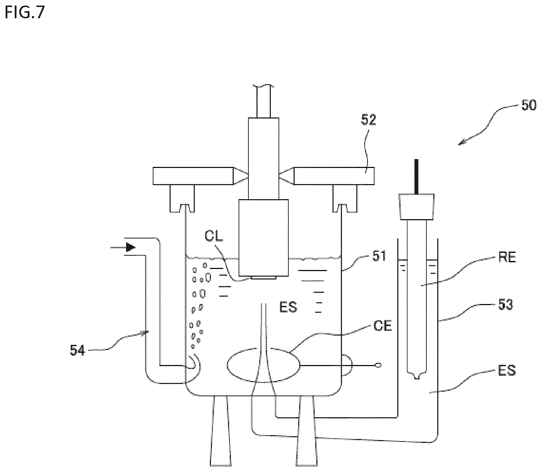

FIG.7 is a schematic diagram showing a brief structure of the rotating disk electrode measuring machine provided with the rotating disk electrode used in the working examples.

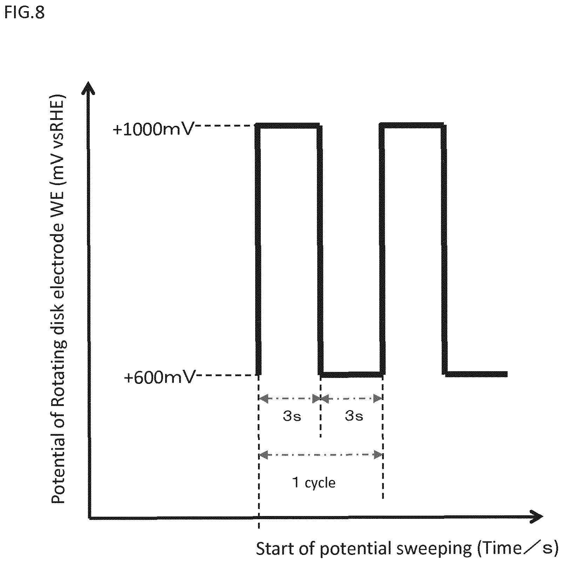

FIG.8 is a graph showing the "potential sweep mode of rectangular wave" where the potential (vsRHE) of the rotating disk electrode WE with respect to the reference electrode RE in the working examples.

MODE FOR CARRYING OUT THE INVENTION

Preferable embodiments of the present invention are described in detail hereunder with reference to the drawings when necessary.

<Electrode catalyst>

FIG.1 is a schematic cross-sectional view showing the preferred first embodiment of an electrode catalyst (core-shell catalyst) of the present invention. And FIG.2 is a schematic cross-sectional view showing the preferred second embodiment of an electrode catalyst of the present invention. Further, FIG.3 is a schematic cross-sectional view showing the preferred third embodiment of an electrode catalyst of the present invention. Furthermore, FIG.4 is a schematic cross-sectional view showing the preferred forth embodiment of an electrode catalyst of the present invention.

(First embodiment)

In the following, by referring FIG.1, the main structure of the first embodiment of the electrode catalyst (core-shell catalyst) of the present invention is explained.

As shown in FIG.1, an electrode catalyst 10 of the first embodiment includes a support 2, and catalyst particles 3 supported on the support 2 and having a so-called "core-shell structure".

Further, the catalyst particle 3 has a so-called "core-shell structure" where a core part 4 formed on the support 2, and a shell part 6 formed on the core part 4.

In addition, the elements of the components (chemical composition) of the core part and the elements of the components (chemical composition) of the shell part 6 are different. In case of the electrode catalyst 10 shown in FIG.1, almost of all range of the surface of the core part 4 is covered with the shell part 6.

The core part 4 contains the Ti oxide and Pd (Pd of zero valent metal state), and the shell part 6 contains Pt (Pt of zero valent metal state). When employing this structure (Pt / Pd + TiOx / C), since the Ti oxide is disposed near the Pt of the shell part 6, in comparison with the Pt / Pd / C catalyst, the electrode catalyst 10 has the catalyst activity and durability higher than or equal thereto, and contributes to the low cost.

(Second embodiment)

In the following, by referring FIG.2, the main structure of the second embodiment of the electrode catalyst of the present invention is explained.

In comparison with the electrode catalyst 10 shown in FIG.1, the electrode catalyst 10A shown in FIG.2 may be in a state where a part of the surface of the core part 4 is covered by the shell part 6a, and the rest part of the surface of the core part 4 is partially exposed (e.g. a state where a part 4s of the surface of the core part 4 shown in FIG.2 being exposed). In other words, as is the case with the electrode catalyst 10A shown in FIG.2, the shell part 6a is partially formed on a part of the surface of the core part 4.

Therefore, in the electrode catalyst of the present invention, the shell part may be formed on at least a part of the surface of the core part, within the scope where the effects of the present invention can be obtained. Even in this structure, since the Ti oxide is disposed neat the Pt of the shell part 6a, the electrode catalyst 10A has the catalyst activity and durability higher than or equal to the Pt / Pd / C catalyst, and contributes to the low cost.

Furthermore, in this case, the main component of the exposed surface 4s of the core part 4 (the analytical region near a surface measured by XPS) shown in FIG.2 may be the Ti oxide. Namely, a percentage (atom %) of the Ti oxide component in the structural components of the exposed surface 4s of the core part (the analytical region near a surface measured by XPS) may be the largest (main component). Even in this case, since the Ti oxide is disposed near the Pt of the shell part 6a on the surface of the catalyst particle 3a, it is possible to obtain the effects of the present invention.

The preparation method for preparing the catalyst having the structure where the main component of the exposed surface 4s of the core part on the surface of the core part 4 such as the electrode catalyst 10A shown in FIG.2 is the Ti oxide is not particularly limited, and can be prepared according to any known preparation methods. For example, at the time when the shell part 6a is formed on a particle containing Pd and Ti oxide (particle being a precursor of the core part), by employing UPD method, it is possible to form the shell part 6a selectively on an area where Pd (Pd of zero valent metal state) is exposed in the surface of the particle containing Pd and Ti oxide.

As the results of our study by using a powder which is prepared by supporting only particles of the Ti oxide on a carbon support, we have found the conditions that a film of Pd cannot be formed on the surface of the particle of the Ti oxide by the UPD method. By using this knowledge, it is possible to prepare an electrode catalyst having a structure where the shell part 6a is formed selectively on an area where Pd (Pd of zero valent metal state) is exposed in the surface of the particle containing Pd and Ti oxide (hereinafter referred to as "electrode catalyst 10A1").

With respect to the electrode catalyst 10A1 (modified embodiment of the electrode catalyst 10A), the exposed surface 4s of the core part in the surface of the core part 4 is preferably composed of the Ti oxide, and the surface other than the exposed surface 4s of the core part in the surface of the core part 4 is preferably composed of Pd (Pd of zero valent metal state). Thereby, the shell part 6a can be formed selectively on the surface other than the exposed surface 4s of the core part.

(Third embodiment)

In the following, by referring FIG.3, the main structure of the third embodiment of the electrode catalyst of the present invention is explained.

In comparison with the electrode catalyst 10 shown in FIG.1, the electrode catalyst 10B shown in FIG.3 has a structure where an intermediate shell part 5b is disposed between the core part 4 and the shell part 6b.

In addition, the intermediate shell part 5b contains Pd.

In case of employing the structure where the intermediate shell part 5b containing Pd (Pd of zero valent metal state) is disposed between the core part 4 and the shell part 6b, at the time when forming the shell part 6b on the intermediate shell part 5b, a known shell part forming method such as the UPD method can be employed, which is preferable to form the shell part on the intermediate shell part 5b relatively easily in the good covering manner. Further, in case of employing the structure where the intermediate shell part 5b is disposed, it is preferable that Pd (Pd of zero valent metal state) is contained as a main component (state where a percentage (atom %) of the Pd of zero valent metal state in the structural components of the intermediate shell part 5b). From the same point of view, here, it is more preferable that the intermediate shell part 5b is composed of Pd (Pd of zero valent metal state) alone.

Even in this structure, since the Ti oxide is disposed neat the Pt of the shell part 6b, the electrode catalyst 10B has the catalyst activity and durability higher than or equal to the Pt / Pd / C catalyst, and contributes to the low cost.

(Forth embodiment)

In the following, by referring FIG.4, the main structure of the forth embodiment of the electrode catalyst of the present invention is explained.

In comparison with the electrode catalyst 10B shown in FIG.3, the electrode catalyst 10C shown in FIG.4 may be in a state where intermediate shell parts (intermediate shell part 5c, intermediate shell part 5d) and shell parts (shell part 6c, shell part 6d) which covers the intermediate shell part are partially formed on a part of the surface of the core part 4, and thus, the surface of the core part 4 is partially exposed (e.g. a state where a part 4s of the surface of the core part 4 shown in FIG.4 being exposed).

More specifically, in case of the electrode catalyst 10C shown in FIG.4, the intermediate shell part 5c is formed on a part of the surface of the core part 4, and the shell part 6c which covers almost of all surface of the intermediate shell part 5c is formed. In addition, the intermediate shell part 5d is formed on a part of the surface of the core part 4, and the shell part 6d which covers a part of the surface of the intermediate shell part 5d is formed.

As shown in FIG.4, there may be in a state where a part of the surface of the intermediate shell part 5d is covered by the shell part 6d, and the part of the surface of the intermediate shell part 5d is partially exposed (e.g. a state where a part 5s of the surface of the intermediate shell part 5d shown in FIG.4 being exposed), within the scope where the effects of the present invention can be obtained.

Even in this structure, since the Ti oxide is disposed neat the Pt of the shell part 6c and neat the Pt of the shell part 6d, the electrode catalyst 10C has the catalyst activity and durability higher than or equal to the Pt / Pd / C catalyst, and contributes to the low cost.

Furthermore, in this case, the main component of the exposed surface 4s of the core part in the surface of the core part 4 (the analytical region near a surface measured by XPS) shown in FIG.4 may be the Ti oxide. Namely, a percentage (atom %) of the Ti oxide component in the structural components of the exposed surface 4s of the core part (the analytical region near a surface measured by XPS) may be largest (main component). Even in this case, since the Ti oxide is disposed near the Pt of the shell part 6c on the surface of the catalyst particle 3c, it is possible to obtain the effects of the present invention.

The preparation method for preparing the catalyst having the structure where the main component of the exposed surface 4s of the core part on the surface of the core part 4 such as the electrode catalyst 10C shown in FIG.4 is the Ti oxide is not particularly limited, and can be prepared according to any known preparation methods. For example, at the time when the intermediate shell part 5c and the intermediate shell part 5d are formed on a particle containing Pd and Ti oxide (particle being a precursor of the core part), by employing UPD method, it is possible to form the intermediate shell part 5c and the intermediate shell part 5d selectively on the surface of Pd (Pd of zero valent metal state) in the surface of the particle containing Pd and Ti oxide. Further, at the time when the shell part 6c is formed on the intermediate shell part 5c, and also at the time when the shell part 6d is formed on the intermediate shell part 5d, by employing UPD method, it is possible to form selectively the shell part 6c on the surface of the intermediate shell part 5c and the shell part 6d on the surface of the intermediate shell part 5d, respectively.

As the results of our study by using a powder which is prepared by supporting only particles of the Ti oxide on a carbon support, we have found the conditions that a film of Pd cannot be formed on the surface of the particle of the Ti oxide by the UPD method. By using this knowledge, it is possible to prepare an electrode catalyst having a structure where the shell part 6c is formed selectively on the surface of the intermediate shell part 5c (hereinafter referred to as "electrode catalyst 10C1").

With respect to the electrode catalyst 10C1 (modified embodiment of the electrode catalyst 10C), the exposed surface 4s of the core part in the surface of the core part 4 is preferably composed of the Ti oxide, and the surface other than the exposed surface 4s of the core part in the surface of the core part 4 is preferably composed of Pd (Pd of zero valent metal state). Thereby, the intermediate shell part 5c and the intermediate shell part 5d can be formed selectively on the surface other than the exposed surface 4s of the core part.

Here, among the electrode catalyst 10C shown in FIG.4, in case of the structure of the aforementioned electrode catalyst 10C1, the intermediate shell part 5c having Pd (Pd of zero valent metal state) as a main component and the intermediate shell part 5d having Pd (Pd of zero valent metal state) as a main component are formed on the surface having Pd (Pd of zero valent metal state) as a main component which is a surface other than the exposed surface 4s of the core part in the surface of the core part 4. Therefore, in the electrode catalyst 10C1, since the chemical composition of the interface of the core part 4 and the intermediate shell part 5c, or the chemical composition of the core part 4 and the intermediate shell part 5d are almost the same, the core part 4 and the intermediate shell part 5c (or the intermediate shell part 5d) may have an appearance like an integrated manner. Namely, the electrode catalyst 10C1 appears to have the same structure as the aforementioned electrode catalyst 10A1 (modified embodiment of the electrode catalyst 10A of the second embodiment). The intermediate shell part 5c having Pd (Pd of zero valent metal state) as a main component means the state where the percentage (atom %) of Pd of zero valent metal state is the largest among the structural components of the intermediate shell part 5c. The intermediate shell part 5d having Pd (Pd of zero valent metal state) as a main component means the state where the percentage (atom %) of Pd of zero valent metal state is the largest among the structural components of the intermediate shell part 5d.

(Common features of first embodiment to forth embodiment)

In the following, the common features among the electrode catalyst 10 shown in FIG.1, the electrode catalyst 10A shown in FIG.2, the electrode catalyst 10B shown in FIG.3, and the electrode catalyst 10C shown in FIG.4 are explained.
It is preferable that the shell part 6 (6a, 6b, 6c) is composed of Pt (Pt of zero valent metal state) alone from the view point that good catalyst properties (hydrogen oxidation activity, oxygen reduction activity) can be easily obtained).
Further, from the viewpoint to obtain the effects of the present invention more reliably, it is preferable that the "Ti oxide" contained in the core part 4 is a Ti oxide having a high chemical stability.
Furthermore, from the viewpoint to obtain the effects of the present invention more reliably, it is preferred that the electrode catalysts 10, 10A, 10B, 10C satisfy the following condition.
Namely, it is preferable that in the electrode catalysts 10, 10A, 10B, 10C, a percentage $R1_{Pt}$ (atom %) of Pt (Pt of zero valent metal state), a percentage $R1_{Pd}$ (atom %) of Pd (Pd of zero valent metal state), and a percentage $R1_{Ti}$} (atom %) of the Ti derived from the Ti oxide in an analytical region near the surface when measured by X-ray photoelectron spectrum analysis (XPS) satisfy the conditions of the following equation (1).

$$0.15 \leq (R1_{Ti} / (R1_{Pt} + R1_{Pd} + R1_{Ti}) \leq 0.75 \qquad (1)$$

The present inventors have found that, when the chemical composition of the analytical region near the surface of the catalyst particle 3, 3a, 3b, 3c of the electrode catalyst 10, 10A 10B, 10C are made to be the structure where the conditions of the above equation (1) are satisfied (structure where a percentage of the Ti oxide is relatively large), the effects of the present invention can be obtained more reliably.
Though the detailed mechanism has not yet been found, the present inventors seem that, when the Ti oxide which satisfies the above equation (1) exists on or near the surface of the catalyst particle 3, 3a, 3b, 3c, the reduction reaction of oxygen on Pt of the shell part 6, 6a, 6b, 6c, 6d of the catalyst particle 3, 3a, 3b, 3c is promoted. For example, when the Ti oxide exists near Pt of the shell part, water yielded by the reduction reaction of oxygen on the Pt can smoothly move from the Pt to the Ti oxide side, which promotes the reduction reaction of oxygen.
Here, from the viewpoint to improve more reliably the catalyst activity (particularly the initial Pt mass activity mentioned after) in comparison with the Pt / Pd / C, the {$R1_{Ti}$ / ($R1_{Pt}$ + $R1_{Pd}$ + $R1_{Ti}$)} is preferably 0.15 to 0.50, more preferably 0.25 to 0.50, further preferably 0.35 to 0.50.
Further, from the viewpoint to improve more reliably the durability (particularly a maintaining ratio of "ECSA after evaluation test" relative to "initial ECSA before evaluation test" in the durability evaluation mentioned after) in comparison with the Pt / Pd / C, the {$R1_{Ti}$ / ($R1_{Pt}$ + $R1_{Pd}$ + $R1_{Ti}$)} is preferably 0.15 to 0.50, more preferably 0.15 to 0.40.
In the present invention, the X-ray photoelectron spectrum analysis (XPS) is carried out under the following (A1) to (A5) conditions.

(A1) X-ray source: Monochromatic AlKa
(A2) Photoelectron taking out angle: $\theta$=75 ° C
(A3) Charge correction: Correcting on the basis that C1S peak energy is 284.8 eV
(A4) Analytical region: 200 $\mu$m
(A5) Chamber pressure at analyzing: about 1 x $10^{-6}$ Pa

Here, the photoelectron taking out angle θ of (A2) is an angle θ, as shown in FIG.5, when an X-ray emitted from an X-ray source 32 is irradiated to a sample set on a sample stage 34, and a photoelectron emitted from the sample is received by a spectroscope 36. Namely, the photoelectron taking out angle θ corresponds to an angle of the light receiving axis of the spectroscope 36 to the surface of the layer of the sample on the sample stage.

From the viewpoint to obtain the effects of the present invention more reliably, it is preferred that the electrode catalysts 10, 10A, 10B, 10C satisfy the following condition.

Namely, it is preferable that in the electrode catalysts 10, 10A, 10B, 10C, a percentage $R1_{Pt}$ (atom %) of Pt (Pt of zero valent metal state), a percentage $R1_{Pd}$ (atom %) of Pd (Pd of zero valent metal state), and a percentage $R1_{Ti}$ (atom %) of the Ti derived from the Ti oxide in an analytical region near the surface when measured by X-ray photoelectron spectrum analysis (XPS) satisfy the conditions of the following equation (2).

$$0.25 \leq (R1_{Ti} / (R1_{Pt} + R1_{Ti}) \leq 0.80 \qquad (2)$$

The present inventors have found that, when the chemical composition of the analytical region near the surface of the catalyst particle 3, 3a, 3b, 3c of the electrode catalyst 10, 10A 10B, 10C are made to be the structure where the conditions of the above equation (2) are satisfied (structure where a percentage of the Ti oxide is relatively large), the effects of the present invention can be obtained more reliably.

Though the detailed mechanism has not yet been found, the present inventors seem that, when the Ti oxide which satisfies the above equation (2) exists on or near the surface of the catalyst particle 3, 3a, 3b, 3c, the reduction reaction of oxygen on Pt of the shell part 6, 6a, 6b, 6c, 6d of the catalyst particle 3, 3a, 3b, 3c is promoted. For example, when the Ti oxide exists near Pt of the shell part, water yielded by the reduction reaction of oxygen on the Pt can smoothly move from the Pt to the Ti oxide side, which promotes the reduction reaction of oxygen.

Here, from the viewpoint to improve more reliably the catalyst activity (particularly the initial Pt mass activity mentioned after) in comparison with the Pt / Pd / C, the $\{R1_{Ti} / (R1_{Pt} + R1_{Ti})\}$ is preferably 0.25 to 0.60, more preferably 0.35 to 0.60, further preferably 0.50 to 0.60.

Further, from the viewpoint to improve more reliably the durability (particularly a maintaining ratio of "ECSA after evaluation test" relative to "initial ECSA before evaluation test" in the durability evaluation mentioned after) in comparison with the Pt / Pd / C, the $\{R1_{Ti} / (R1_{Pt} + R1_{Ti})\}$ is preferably 0.25 to 0.60, more preferably 0.25 to 0.55.

In the equation (2), XPS is also measured under the aforementioned (A1) to (A6) conditions.

Further, it is preferable that the electrode catalyst 10, 10A, 10B, 10C has the $R1_{Pt}$ in the equation (1) or the equation (2) is 19 atom % or more.

Thereby, since a percentage of the part of the Pt (Pt of zero valent metal state) having high catalyst properties on the surface of the electrode catalyst 10, 10A, 10B, 10C can be sufficiently obtained, the effects of the present invention can be obtained more reliably. Further, from the same point of view, the $R1_{Pt}$ is more preferably 30 atom % or more, further preferably 30 atom % to 47 atom %.

Further, it is preferable that the electrode catalyst 10, 10A, 10B, 10C has the percentage $R1_{Pd}$ of Pd (Pd of zero valent metal state) in the equation (1) is 36 atom % or less. Thereby, since a percentage of the part of the Pd (Pd of zero valent metal state) on the surface of the electrode catalyst 10, 10A, 10B, 10C tends to be decreased more, it is possible to inhibit elution of Pd more reliably. Therefore, the effects of the present invention can be obtained more reliably, for example, by increasing the durability (particularly a maintaining ratio of "ECSA after evaluation test" relative to "initial ECSA before evaluation test" in the durability evaluation mentioned after) more.

Further, from the viewpoint of obtaining sufficient catalyst properties of the Pt part of the shell part, it is preferable that the core part contains a sufficient amount of Pd, and from this point of view, the $R1_{Pd}$ is preferably 9 atom % to 36 atom %, more preferably 17 atom % to 36 atom %.

Furthermore, from the viewpoint of obtaining the effects of the present invention more reliably, it is preferable that in the electrode catalyst 10, 10A, 10B, 10C, the R1Ti in the equation (1) or the equation (2) is 18 atom % to 71 atom %. Further, from the same point of view, the R1Ti is more preferably 18 atom % to 50 atom %.

Further, it is preferable that in the electrode catalyst 10, 10A, 10B, 10C, a support rate LTi (wt %) of Ti derived from the Ti oxide measured by ICP light emission analysis is 4.7.wt % or more. By configuring the electrode catalyst 10, 10A, 10B, 10C in such a manner, the amount to be used of Pd of the core part 4 can be also decreased, which results in contribution to low cost. On the other hand, from the viewpoint of ensuring electron conductivity of the catalyst particle 3, 3a, 3b, 3c easily, the support rate LTi (wt %) of the Ti oxide is preferably 9.5 wt % or less, more preferably 9.0 wt % or less.

Furthermore, it is preferable that in the electrode catalyst 10, 10A, 10B, 10C, a support rate $L_{Pt.}$ (wt %) of Pt and a support rate $L_{Pd}$ (wt %) of Pd measured by ICP light emission analysis satisfy the conditions of the following equation (3).

$$\mathrm{L_{Pt}} \, / \, \mathrm{L_{Pd}} \geq 0.30 \qquad (3)$$

By configuring the electrode catalyst 10, 10A, 10B, 10C so as to satisfy the equation (3), the amount to be used of Pd of the core part can be also decreased, which results in contribution to low cost.

Further, it is preferable that in the electrode catalyst 10, 10A, 10B, 10C, an average value of crystallite size of the crystal particle 3, 3a, 3b, 3c measured by powder X-ray diffraction (XRD) is 3 to 35.0 nm.

It is preferable that the average value of the crystallite size is 3 nm or more, since there tends largely to form the particles to be the core part 4 on the support more easily. Further, it is preferable that the average value of the crystallite size is 35.0 nm or less, since it is easy to form the particles to be the core part on the support under highly dispersing state. Further, from the same point of view, the average value of crystallite size of the crystal particle measured by powder X-ray diffraction (XRD) is more preferably 3 to 20 nm, further preferably 3 nm or more and less than 20 nm.

As for the thicknesses of the shell part 6, 6a, 6b, 6c, 6d, a preferable range thereof is to be appropriately determined based on the design concept of the electrode catalyst. Further, as for the thicknesses of the intermediate shell part 5b, 5c, 5d, a preferable range thereof is to be appropriately determined based on the design concept of the electrode catalyst.

For example, when the amount of Pt used to compose the shell part 6, 6a, 6b, 6c, 6d is intended to be minimized, a layer composed of one atom (one atomic layer) is preferred, and in this case, when there is only one kind of metal element composing the shell part 6, 6a, 6b, 6c, 6d, it is preferred that the thickness of the shell part 6, 6a, 6b, 6c, 6d be twice as large as the diameter of one atom of such metal element (provided that an atom is considered as a sphere).

Further, when the metal elements contained in the shell part 6, 6a, 6b, 6c, 6d is two or more, it is preferred that the second shell part 6 has a thickness equivalent to that of a layer composed of one atom (one atomic layer formed with two or more kinds of atoms being provided in the surface direction of the core part 4).

For example, if the durability of the electrode catalyst is to be further improved by making the thickness of the shell part 6, 6a, 6b, 6c, 6d larger, the thickness is preferably 1 to 5 nm, more preferably 2 to 10 nm.

The shell part 6, 6a, 6b, 6c, 6d contains Pt (Pt of zero valent metal state). From the viewpoint of obtaining the effects of the present invention more reliably, and from the viewpoint of production easiness, it is preferable that the shell part 6, 6a, 6b, 6c, 6d is composed of Pt (Pt of zero valent metal state) as a main component (preferably 50 wt % or more, more preferably 80 wt % or more), further preferable is composed of Pt (Pt of zero valent metal state).

Here, in the present invention, "average particle size" refers to an average value of the diameters of an arbitrary number of particles as particle groups that are observed through electron micrographs.

The thickness of the intermediate shell part 5b, 5c, 5d is preferably the thickness of the shell part 6 or less. Therefore, it is preferable, because the amount of Pd to be used can be deceased, and the eluted amount of Pd can also be decreased when using as an electrode catalyst.

The intermediate shell part 5b, 5c, 5d contains Pd (Pd of zero valent metal state). From the viewpoint of obtaining the effects of the present invention more reliably, and from the viewpoint of production easiness, it is preferable that the intermediate shell part 5 is composed of Pd (Pd of zero valent metal state) as a main component (preferably 50 wt % or more, more preferably 80 wt % or more, further preferably 90 wt% or more), furthermore preferable is composed of Pd (Pd of zero valent metal state).

There are no particular restrictions on the support 2, as long as such being capable of supporting the complexes composed of the core parts 4 and the shell part 6, 6a, 6b, 6c, 6d and the intermediate shell part 5b, 5c, 5d, and has a large surface area.

Moreover, it is preferred that the support 2 be that exhibiting a favorable dispersibility and a superior electrical conductivity in a composition used to form a gas diffusion electrode having the electrode catalyst 10, 10A, 10B, 10C.

The support 2 may be appropriately selected from carbon-based materials such as glassy carbon (GC), fine carbon, carbon black, black lead, carbon fiber, activated carbon, ground product of activated carbon, carbon nanofiber and carbon nanotube; and glass-based or ceramic-based materials such as oxides.

Among these materials, carbon-based materials are preferred in terms of their adsorptivities with respect to the core part 4 and in terms of a BET specific surface area of the support 2.

Further, as a carbon-based material, an electrically conductive carbon is preferred, and particularly, an electrically conductive carbon black is preferred as an electrically conductive carbon.

Examples of such electrically conductive carbon black include products by the names of "Ketjenblack EC300 J," "Ketjenblack EC600" and "Carbon EPC" (produced by Lion Corporation).

The core part 4 is not particularly limited as long as the Ti oxide and Pd (Pd of zero valent metal state) are included. When producing the electrode catalyst 10, 10A, 10B, 10C, it is preferable that the preferred conditions mentioned in the above equation (1), the equation (2), the equation (3), and the like are satisfied.

EP 3 425 711 A1

(Modified embodiment)

In the above, the preferred embodiment of the electrode catalyst of the present invention, but the electrode catalyst of the present invention is not limited thereto.

For example, the electrode catalyst of the present invention may be a state where at least two of the electrode catalyst 10 shown in FIG.1, the electrode catalyst 10A shown in FIG.2, the electrode catalyst 10B shown in FIG.3, the electrode catalyst 10C shown in FIG.4 coexist in a mixed manner, within the scope where the effects of the present invention can be obtained (not shown).

Further, as the electrode catalyst 10C of the forth embodiment shown in FIG.4, within the scope where the effects of the present invention can be obtained, there may be a state where the shell part 6c and the shell part 6d coexist in a mixed manner with respect to an identical core part 4. Further, the electrode catalyst of the present invention, within the scope where the effects of the present invention can be obtained, there may be a state where only the shell part 6c shown in FIG.4 is formed with respect to an identical core part 4 or a state where only the shell part 6d shown in FIG.4 is formed with respect to an identical core part 4.

Furthermore, within the scope where the effects of the present invention can be obtained, the electrode catalyst 1 may also be in a state where "particles only composed of the core part 4 that are not covered by the shell part 6 (6a, 6b, 6c, 6d)" are supported on the support 2, in addition to at least one of the above electrode catalyst 10, the electrode catalyst 10A, the electrode catalyst 10B and the electrode catalyst 10C (not shown).

Furthermore, within the scope where the effects of the present invention can be obtained, the electrode catalyst 1 may also be in a state where "particles only composed of the constituent element of the shell part 6 (6a, 6b, 6c, 6d)" are supported without being in contact with the core part 4, in addition to at least one of the electrode catalyst 10, the electrode catalyst 10A, the electrode catalyst 10B and the electrode catalyst 10C (not shown).

Furthermore, within the scope where the effects of the present invention can be obtained, the electrode catalyst 1 may also be in a state where "particles only composed of the core part 4 that are not covered by the shell part 6 (6a, 6b, 6c, 6d)" and "particles only composed of the constituent element of the shell part 6 (6a, 6b, 6c, 6d)" are individually supported, in addition to at least one of the electrode catalyst 10, the electrode catalyst 10A, the electrode catalyst 10B and the electrode catalyst 10C.

<Preparation method of the electrode catalyst 10, 10A>

The preparation method of the electrode catalyst 10, 10A include the "core particle forming step" where the core particles containing the Pd and the Ti oxide are formed on the support, the "shell part forming step" where the shell part 6, 6a is formed on at least one of the surface of the core particles obtained by the core particle forming step.

The electrode catalyst 10, 10A is produced by supporting the core part 4 and the shell part 6, 6a which configure the catalyst particles 3, 3a on the support 2 in this order.

The preparation method of the electrode catalyst 10, 10A is not particularly limited as long as the method allows the catalyst particles 3, 3a to be supported on the support 2.

Examples of the production method of the electrode catalyst precursor include an impregnation method where a solution containing the catalyst component is brought into contact with the support 2 to impregnate the support 2 with the catalyst components; a liquid phase reduction method where a reductant is put into a solution containing the catalyst component; an electrochemical deposition method such as under-potential deposition (UPD); a chemical reduction method; a reductive deposition method using adsorption hydrogen; a surface leaching method of alloy catalyst; immersion plating; a displacement plating method; a sputtering method; and a vacuum evaporation method.

In the "core particle forming step", it is preferable to regulate the raw materials, blend ratios of the raw materials, reaction conditions of the synthetic reactions, and the like by combining the aforementioned known techniques or the like so as to satisfy the aforementioned preferred conditions of the equation (1), (2), (3).

Also, in the "shell part forming step", it is preferable to regulate the raw materials, blend ratios of the raw materials, reaction conditions of the synthetic reactions, and the like by combining the aforementioned known techniques or the like so as to satisfy the aforementioned preferred conditions of the equation (1), (2), (3).

As a method for preparing the electrode catalyst 10, 10A so as to satisfy the preferred conditions such as the conditions shown by the equation (1), (2), (3), for example, there is a method where the chemical formulation and structure of the resulting product (catalyst) are analyzed by various known analytical techniques, the obtained analyzed data are fed back to the production process, and then the raw materials to be selected, the blend ratios of the raw materials, the synthetic reaction to be selected, the reaction conditions of the selected synthetic reaction, and the like are regulated and varied, and the like.

<Preparation method of the electrode catalyst 10B, 10C>

The preparation method of the electrode catalyst 10B, 10C include the "core particle forming step" where the core particles containing the Pd and the Ti oxide are formed on the support, the "intermediate shell part forming step" where the intermediate shell part 5b (or 5c, 5d) is formed on at least one of the surface of the core particles obtained by the core particle forming step, and the "shell part forming step" where the shell part 6 (6a, 6b, 6c, 6d) is formed on at least one of the surface of the particles obtained by the intermediate shell forming step.

The electrode catalyst 10B, 10C is produced by supporting the core part 4, the intermediate shell part 5b, 5c, 5d and the shell part 6b, 6c, 6d which configure the catalyst particles 3b, 3c on the support 2 in this order.

The preparation method of the electrode catalyst 10B, 10C is not particularly limited as long as the method allows the catalyst particles 3b, 3c to be supported on the support 2.

Examples of the production method of the electrode catalyst precursor include an impregnation method where a solution containing the catalyst component is brought into contact with the support 2 to impregnate the support 2 with the catalyst components; a liquid phase reduction method where a reductant is put into a solution containing the catalyst component; an electrochemical deposition method such as under-potential deposition (UPD); a chemical reduction method; a reductive deposition method using adsorption hydrogen; a surface leaching method of alloy catalyst; immersion plating; a displacement plating method; a sputtering method; and a vacuum evaporation method.

In the "core particle forming step", it is preferable to regulate the raw materials, blend ratios of the raw materials, reaction conditions of the synthetic reactions, and the like by combining the aforementioned known techniques or the like so as to satisfy the aforementioned preferred conditions of the equation (1), (2), (3).

Also, in the "intermediate shell part forming step", it is preferable to regulate the raw materials, blend ratios of the raw materials, reaction conditions of the synthetic reactions, and the like by combining the aforementioned known techniques or the like so as to satisfy the aforementioned preferred conditions of the equation (1), (2), (3).

Further, in the "shell part forming step", it is preferable to regulate the raw materials, blend ratios of the raw materials, reaction conditions of the synthetic reactions, and the like by combining the aforementioned known techniques or the like so as to satisfy the aforementioned preferred conditions of the equation (1), (2), (3).

As a method for preparing the electrode catalyst 10B, 10C so as to satisfy the preferred conditions such as the conditions shown by the equation (1), (2), (3), for example, there is a method where the chemical formulation and structure of the resulting product (catalyst) are analyzed by various known analytical techniques, the obtained analyzed data are fed back to the production process, and then the raw materials to be selected, the blend ratios of the raw materials, the synthetic reaction to be selected, the reaction conditions of the selected synthetic reaction, and the like are regulated and varied, and the like.

<Structure of fuel cell>

FIG.6 is a schematic view showing preferable embodiments of a composition for forming gas diffusion electrode containing the electrode catalyst of the present invention; a gas diffusion electrode produced using such composition for forming gas diffusion electrode; a membrane-electrode assembly (Membrane Electrode Assembly: hereinafter referred to as "MEA" if necessary) having such gas diffusion electrode; and a fuel cell stack having such MEA.

The fuel cell stack 40 shown in FIG.6 has a structure where the MEA 42 is one-unit cell, and the multiple layers of such one-unit cells are stacked.

Further, the fuel cell stack 40 has the MEA 42 that is equipped with an anode 43 of the gas diffusion electrode, a cathode 44 of the gas diffusion electrode, and an electrolyte membrane 45 provided between these electrodes. Furthermore, the fuel cell stack 40 has a structure where the MEA 42 is sandwiched between a separator 46 and a separator 48.

Described hereunder are the composition for forming gas diffusion electrode, the anode 43 and cathode 44 of the gas diffusion electrode, the MEA 42, all of which serve as members of the fuel cell stack 40 containing the electrode catalyst of the present invention.

<Composition for forming gas diffusion electrode>

The electrode catalyst of the present invention can be used as a so-called catalyst ink component and serve as the composition for forming gas diffusion electrode in the present invention. One feature of the composition for forming gas diffusion electrode of the present invention is that this composition contains the electrode catalyst of the present invention.

The main components of the composition for forming gas diffusion electrode are the aforementioned electrode catalyst and an ionomer solution. The composition of the ionomer solution is not particularly limited. For example, the ionomer solution may contain a polyelectrolyte exhibiting a hydrogen ion conductivity, water and an alcohol.

The polyelectrolyte contained in the ionomer solution is not particularly limited. Examples of such polyelectrolyte include known perfluorocarbon resins having sulfonate group, carboxylic acid group. As an easily obtainable hydrogen ion-conductive polyelectrolyte, there can be listed, for example, Nafion (registered trademark of Du Pont), ACIPLEX (registered trademark of Asahi Kasei Chemical Corporation) and Flemion (registered trademark of ASAHI GLASS Co., Ltd).

The composition for forming gas diffusion electrode can be produced by mixing, crushing and stirring the electrode catalyst and the ionomer solution.
The composition for forming gas diffusion electrode may be prepared using crushing and mixing machines such as a ball mill and/or an ultrasonic disperser. A crushing and a stirring condition at the time of operating a crushing and mixing machine can be appropriately determined in accordance with the mode of the composition for forming gas diffusion electrode.

The composition of each of the electrode catalyst, water, alcohol and hydrogen ion-conductive polyelectrolyte that are contained in the composition for forming gas diffusion electrode may be set so as to be that capable of achieving a favorable dispersion state of the electrode catalyst, allowing the electrode catalyst to be distributed throughout an entire catalyst layer of the gas diffusion electrode and improving the power generation performance of the fuel cell.

<Gas diffusion electrode>

The anode 43 of the gas diffusion electrode has a structure having a gas diffusion layer 43a and a catalyst layer 43b which is provided on the surface of the gas diffusion layer 43a at an electrolyte membrane 45 side.

The cathode 44 has, in the same manner as the anode 43, a structure having a gas diffusion layer (not shown) and a catalyst layer (not shown) which is provided on the surface of the gas diffusion layer 43a at an electrolyte membrane 45 side.

The electrode catalyst of the present invention may be contained in the catalyst layer of at least one of the anode 43 and the cathode 44. Further, it is preferable to be contained in the both catalyst layers of the anode 43 and the cathode 44.

The gas diffusion electrode can be used as an anode, and also can be used as a cathode.

Since the gas diffusion electrode (the anode 43 and the cathode 44) according to the present invention contains the electrode catalyst of the present invention, it is possible to produce easily a gas diffusion electrode which has the catalyst activity (polarization property) and durability higher than or equal to the gas diffusion electrode containing the Pt / Pd / C catalyst, and contributes to the low cost.

(Electrode catalyst layer)

In the case of the anode 43, the catalyst layer 43b serves as a layer where a chemical reaction of dissociating a hydrogen gas sent from the gas diffusion layer 43a into hydrogen ions takes place due to the function of the electrode catalyst 10 contained in the catalyst layer 43b. Further, in the case of the cathode 44, the catalyst layer 43b serves as a layer where a chemical reaction of bonding an air (oxygen gas) sent from the gas diffusion layer 43a and the hydrogen ions that have traveled from the anode 43 through the electrolyte membrane takes place due to the function of the electrode catalyst 10 contained in the catalyst layer 43b.

The catalyst layer 43b is formed using the abovementioned composition for forming gas diffusion electrode. It is preferred that the catalyst layer 43b have a large surface area such that the reaction between the electrode catalyst 10 and the hydrogen gas or air (oxygen gas) sent from the diffusion layer 43a is allowed take place to the fullest extent. Moreover, it is preferred that the catalyst layer 43b be formed in a manner such that the catalyst layer has a uniform thickness as a whole. The thickness of the catalyst layer 43b can be appropriately adjusted and is not particularly limited, and preferably is 2 to 200 μm.

(Gas diffusion layer)

The gas diffusion layer equipped to the anode 43 of the gas diffusion electrode and the cathode 44 of the gas diffusion electrode serves as a layer provided to diffuse to each of the corresponding catalyst layers the hydrogen gas introduced from outside the fuel cell stack 40 into gas flow passages that are formed between the separator 46 and the anode 43, and the air (oxygen gas) introduced into gas passages that are formed between the separator 48 and the cathode 44. In addition, the gas diffusion layer plays a role of supporting the catalyst layer so as to immobilize the catalyst layer to the surface of the gas diffusion electrode.

The gas diffusion layer has a function of favorably passing the hydrogen gas or air (oxygen gas) and then allowing such hydrogen gas or air to arrive at the catalyst layer. For this reason, it is preferred that the gas diffusion layer have a water-repellent property. For example, the gas diffusion layer has a water repellent component such as polyethylene terephthalate (PTFE).

There are no particular restrictions on a material that can be used in the gas diffusion layer, and there can be employed a material known to be used in a gas diffusion layer of a fuel cell electrode. For example, there may be used a carbon paper; or a material made of a carbon paper as a main raw material and an auxiliary raw material applied to the carbon paper as the main raw material, such auxiliary raw material being composed of a carbon powder as an optional ingredient, an ionexchange water also as an optional ingredient and a polyethylene terephthalate dispersion as a binder. The thickness of the gas diffusion layer can be appropriately determined based on, for example, the size of a cell used in a fuel cell.

The anode 43 of the gas diffusion electrode and the cathode 44 of the gas diffusion electrode may have an intermediate layer (not shown) between the gas diffusion layer and the catalyst layer.

(Production method of gas diffusion electrode)

A production method of the gas diffusion electrode is now explained. The gas diffusion electrode of the present invention may be produced so that the electrode catalyst of the present invention is a structural component of the catalyst layer, and the method of production is not particularly limited, and any known production method can be employed.

For example, the gas diffusion electrode may be produced through a step of applying the composition for forming gas diffusion electrode which contains the electrode catalyst, the hydrogen ion-conductive polyelectrolyte and the ionomer to the gas diffusion layer, and a step of drying such gas diffusion layer to which the composition for forming gas diffusion electrode has been applied to form the catalyst layer.

<Membrane-electrode assembly (MEA)>

The MEA 42 of the preferred embodiment of the MEA according to the present invention shown in FIG.6 has a structure having the anode 43, the cathode 44 and the electrolyte membrane 45. The MEA 42 has a structure where at least one of the anode 43 and the cathode 44 has the gas diffusion electrode containing the electrode catalyst of the present invention.

Since the MEA 42 contains the gas diffusion electrode of the present invention, it is possible to give easily the structure which has the catalyst activity and durability higher than or equal to the MEA which contains the Pt / Pd / C catalyst in the gas diffusion electrode, and contributes to the low cost.

The MEA 42 can be produced by stacking the anode 43, the electrolyte 300, and the cathode 44 in this order, and then bonded under pressure.

<Fuel cell stack>

When one-unit cell (single cell) has a structure where the separator 46 is disposed on the outer side of the anode 43 of the MEA 42 and the separator 48 is disposed on the outer side of the cathode 44, the fuel cell stack 40 of the preferred embodiment of the fuel cell stack according to the present invention shown in FIG.6 is composed of only one-unit cell or an integrated structure of two or more (not shown).

Since the fuel cell stack 40 contains the MEA 42 of the present invention, it is possible to give easily the structure which has the catalyst activity and durability higher than or equal to the fuel cell stack containing at least one MEA which contains the Pt / Pd / C catalyst in the gas diffusion electrode, and contributes to the low cost.

The fuel cell system is completed by attaching peripheral devices to the fuel cell stack 40 and assembling them.

EXAMPLE

In the following, the present invention is more specifically explained by referring working examples, but the present invention is not limited to the following working examples.

(I) Prevision of electrode catalyst for Examples and Comparative Examples (Example 1)

<Production of electrode catalyst>

["Pt / Pd / Pd + TiO$_2$ / C" powder where the shell part of Pt is formed on Pd / Pd + TiO$_2$ / C]

A "Pt / Pd / Pd + TiO$_2$ / C" powder {Trade name "NE-H122T10-BBD-E", available from N.E.CHEMCAT} where the shell part of Pt is formed on Pd of the particle of the following "Pd / Pd + TiO$_2$ / C" powder was prepared as an electrode catalyst of Example 1.

This Pt / Pd / Pd + $TiO_2$ / C powder was a powder which was prepared by forming selectively the shell part of Pt on the intermediate layer of the Pd (Pd of zero valent metal state) in the following Pd / Pd + $TiO_2$ / C powder by adjusting the conditions of the UPD method. The present inventors assume that the structure is the structure of the electrode catalyst 10C1 which is the modified embodiment of the electrode catalyst 10C of the forth embodiment shown in FIG.4. The electrode catalyst 10C1 has almost the same appearance as of the electrode catalyst 10A1 which is the modified embodiment of the electrode catalyst 10A of the second embodiment shown in FIG.2.

["Pd / Pd + $TiO_2$ / C" powder where the intermediate shell part of Pd is formed on Pd + $TiO_2$ / C]

A "Pd / Pd + $TiO_2$ / C" powder {Trade name "NE-H022T0-BD-E", available from N.E.CHEMCAT} where the intermediate shell part of Pd is formed on the surface of the particle of the following "Pd + $TiO_2$ / C" powder was provided.
This Pd / Pd + $TiO_2$ / C powder was a powder which was prepared by forming selectively the intermediate layer of Pd on the part of Pd (part other than the $TiO_2$ part) in the following Pd + $TiO_2$ / C powder by adjusting the conditions of the UPD method. The present inventors assume that the structure is the structure of precursor before forming the shell part 6c, 6d in the electrode catalyst 10C1 which is the modified embodiment of the electrode catalyst 10C of the forth embodiment shown in FIG.4.

[Core particle supporting carbon "Pd + $TiO_2$ / C" powder]

A "Pd + $TiO_2$ / C" powder {Trade name "NE-H002T0-D-E", available from N.E.CHEMCAT} where the core particles of the Pd and the Ti oxide ($TiO_2$) are supported on a carbon black powder was prepared.
The Pd + $TiO_2$ / C powder was prepared by heat-treating a powder containing a commercially available carbon black powder (specific surface area of 750 to 850 $m^2$/g) and a commercially available Ti compound and a commercially available Pd compound under a reduction atmosphere.
It was confirmed, as a result of the XRD and XPS analyses, that the Pd + $TiO_2$ / C powder is composed of Pd and the Ti oxide ($TiO_2$).

<Surface analysis of electrode catalyst by X-ray photoelectron spectroscopy (XPS)>

With respect to the electrode catalyst of Example 1, the surface analysis was conducted by the XPS to measure the percentage $R1_{Pt}$ (atom %) of Pt, the percentage $R1_{Pd}$ (atom %) of Pd, and the percentage $R1_{Ti}$ (atom %) of Ti derived from the $TiO_2$.
Specifically, the analysis was conducted by using "Quantera SXM" (available from ULVAC-PHI, Inc.) as the XPS under the following conditions.

(A1) X-ray source: Monochromatic AlKa
(A2) Photoelectron taking out angle: $\theta$=75 °C (referring FIG.5)
(A3) Charge correction: Correcting on the basis that C1S peak energy is 284.8 eV
(A4) Analytical region: 200 $\mu$m
(A5) Chamber pressure at analyzing: about 1 x $10^{-6}$ Pa
(A6) Measuring depth (Escaping depth): about 5 nm or less

The results of the analysis are shown in TABLE 1. When calculating the percentage $R1_{Pt}$ (atom %) of Pt, the percentage $R1_{Pd}$ (atom %) of Pd and the percentage $R1_{Ti}$ (atom %) of Ti derived from the $TiO_2$, the numerical value are calculated so that the sum of the three components is 100 %. Namely, in the analytical region near a surface of the electrode catalyst, a percentage of carbon (atom %) detected other than the Pt, the Pd and the $TiO_2$ is omitted from the calculation.

<Measurement (ICP analysis) of support rate>

With respect to the electrode catalyst of Example 1, the support rate $L_{Pt}$ (wt %) of Pt, the support rate $L_{Pd}$ (wt %) of Pd and the support rate $L_{Ti}$ (wt %)of Ti were measured by the following method.
The electrode catalyst of the working example 1 was immersed in an aqua regia to dissolve the metal. Then, carbon as an insoluble component was removed from the aqua regia. Next, the aqua regia from which carbon had been removed was subjected to ICP analysis.
The results of the ICP analysis are shown in TABLE 1.

<Surface observation · structural observation of electrode catalyst>

With respect to the electrode catalyst of Example 1, as a result of confirming STEM-HAADF image and EDS elemental mapping image, it was confirmed that the electrode catalyst had a structure where the catalyst particles having a core-shell structure where a layer of Pd of the shell part was formed on at least a part of surface of the particle of the core part of Pd and $TiO_2$ were supported on the electrically conductive carbon support.

(Example 2 to Example 7)

The electrode catalysts of Example 2 to Example 7 were produced by employing the same preparation conditions and the same raw materials except that the amounts of the raw materials to be used and the reaction conditions, and the like were controlled slightly so that the catalyst had the results of the XPS analysis of the surface of the electrode catalyst ($R1_{Pt}$, $R1_{Pd}$, $R1_{Ti}$), the results of the ICP analysis of the whole electrode catalyst ($L_{Pt}$, $L_{Pd}$, $L_{Ti}$), the results of the XPS analysis of the surface of the catalyst particle {$R1_{Ti}$ / ($R1_{Pt}$ + $R1_{Pd}$ + $R1_{Ti}$)}, or {$R1_{Ti}$ / ($R1_{Pt}$ + $R1_{Ti}$)} as shown in TABLE 1.

The XPS analysis and the ICP analysis were conducted in the same conditions as Example 1.

Further, with respect to the electrode catalysts of Example 2 to 7, as a result of confirming STEM-HAADF image and EDS elemental mapping image, it was confirmed that the electrode catalyst had a structure where the catalyst particles having a core-shell structure where a layer of the shell part of Pt was formed on at least a part of surface of the particle of the core part of Pd and the Ti oxide was supported on the electrically conductive carbon support.

(Comparative Example 1)

<Production of electrode catalyst>

["Pt / Pd / C" powder where the shell part of Pt is formed on Pd / C]

A "Pt / Pd / C" powder {Trade name "NE-H1210-BD-E", available from N.E.CHEMCAT} where the shell part of Pt is formed on Pd of the particle of the following "Pd / W / C" powder was prepared as an electrode catalyst of Comparative Example 1.

This Pt / Pd / C powder was a powder which was prepared by forming the shell part of Pt on the Pd particle in the following Pd / C powder by adjusting the conditions of the UPD method.

[Core particle supporting carbon "Pd / C" powder]

A "Pd / C" powder {Trade name "NE-H0200-D-E", available from N.E.CHEMCAT} where the core particle of Pd was supported on the carbon black powder was prepared.

This Pd / C powder was prepared according to the following manner. At first, a powder where the Pd particles were supported on the carbon powder was obtained by preparing a mixed solution of a commercially available carbon black powder (specific surface area 750 to 850 $m^2$/g), sodium tetrachloropalladate(II) and water, and adding thereto a reducing agent, and then reducing palladium ion in the solution. Next, this Pd / C powder was prepared by subjecting the powder where the Pd particles were supported on the carbon powder to the same heat treatment under the reduction atmosphere which was used for preparing the core particle-supported carbon "Pd + $TiO_2$ / C" powder of Example 1.

The electrode catalyst of Comparative Example 1 was also subjected to the XPS analysis and the ICP analysis under the same conditions as those of the electrode catalyst of Example 1. The results are shown in TABLE 1.

Further, with respect to the electrode catalyst of Comparative Example 1, as a result of confirming STEM-HAADF image and EDS elemental mapping image, it was confirmed that the electrode catalyst had a structure where the catalyst particles having a core-shell structure where a layer of Pt of the shell part was formed on at least a part of the surface of the particle of the core part of the Pd were supported on the electrically conductive carbon support.

(II) Production of composition for forming gas diffusion electrode

A powder of each of the electrode catalysts of Examples 1 to 7 and Comparative Example 1 was taken by an amount of about 8.0 mg through measurement, and was put into a sample bottle together with an ultrapure water of 2.5 mL, followed by mixing the same while under the influence of an ultrasonic irradiation, thus producing a slurry (suspension) of the electrode catalyst.

Next, there was prepared a Nafion-ultrapure water solution by mixing an ultrapure water of 10.0 mL and a 10 wt% Nafion (registered trademark) dispersion aqueous solution (product name "DE1020CS" by Wako Chemical Ltd.)

of 20 µL in a different container.

The Nafion-ultrapure water solution of 2.5 mL was slowly poured into the sample bottle containing the slurry (suspension) of the electrode catalyst, followed by thoroughly stirring the same at a room temperature for 15 min while under the influence of an ultrasonic irradiation, thus obtaining a composition for forming gas diffusion electrode.

(III) Formation of electrode layer on electrode for evaluation test

For preparation of evaluation test of the electrode catalyst by a rotating disk electrode method (RDE method) mentioned after, a catalyst layer CL (referring to FIG.7) containing a powder of the electrode catalyst of Examples 1 to 7, a catalyst layer CL (referring to FIG.7) containing a powder of the electrode catalyst of Comparative Example 1 were formed on the electrode surface of a rotating disk electrode WE (referring FIG.7) according to the following manner.

Namely, the composition for forming gas diffusion electrode was taken out by an amount of 10 µL, and was dropped onto the clean surface of the rotating disk electrode WE. Thereafter, the composition was applied to the whole surface of the electrode of the rotating disk electrode WE to form a coating layer. The coating film made of the composition for forming gas diffusion electrode was dried under a temperature of 23°C and a humidity of 50% RH for 2.5 hours to form the catalyst layer CL on the surface of the rotating disk electrode WE.

(IV) Evaluation test of catalyst activity of electrode catalyst

Next, by using the rotating disk WE where the catalyst layer CL including the electrode catalyst of Example 1 to Example 7 was formed and the rotating disk WE where the catalyst layer CL including the electrode catalyst of Comparative Example 1 was formed, the evaluation test of catalyst activity and the evaluation test of durability were conducted according to the following manner.

In addition, a mass activity of platinum (Mass Act, mA/g-Pt) at +0.9 V (vs RHE) was measured by the rotating disk electrode method (RDE method) according to the following manner.

[Configuration of rotating disk electrode measuring apparatus]

FIG.7 is a schematic diagram showing a schematic configuration of a rotating disk electrode measuring device 50 used in the rotating disk electrode method (RDE method).

As shown in FIG.7, the rotating disk electrode measuring device 50 mainly includes a measuring cell 51, a reference electrode RE, a counter electrode CE, a rotating disk electrode WE and an electrolyte solution ES. In addition, when evaluating the catalyst, an electrolyte solution ES was added to the measuring cell 51.

The measuring cell 51 has almost cylindrical shape having an opening at the upper surface, and a fixing member 52 of the rotating disk electrode WE which is also a gas-sealable rid is disposed at the opening. At the center of the fixing member 52, a gas-sealable opening is disposed for inserting and fixing the main body of the electrode of the rotating disk electrode WE into the measuring cell 51.

On the side of the measuring cell 51, an almost L-shaped Luggin tube 53 is disposed. Further one end of the Luggin tube 53 has a Luggin capillary which can be inserted into the inside of the measuring cell 51, the electrolyte solution ES of the measuring cell 51 also enters to the inside of the Luggin tube 53. The other end of the Luggin tube 53 has an opening, the reference electrode RE can be inserted into the Luggin tube 53 from the opening.

As the rotating disk electrode measuring apparatus 50, "Model HSV110 available from Hokuto Denko Corp. was used. An Ag / AgCl saturated electrode was used as the reference electrode RE, a Pt mesh with Pt black was used as the counter electrode CE, and an electrode having a diameter of 5.0 mmφ, area of 19.6 mm2 available from Glassy Carbon Ltd. Was used as the rotating disk electrode WE. Further, HClO4 of 0.1M was used as the electrolyte solution ES.

[Cleaning of rotating disk electrode WE]

As shown in FIG.7, after dipping the rotating disk electrode WE in the HClO4 electrolyte solution ES within the above rotating disk electrode measuring apparatus 50, the oxygen in the electrolyte solution ES was purged for 30 minutes or more with an argon gas by introducing the argon gas from a gas introducing tube 54 which was connected to the side of the measuring cell 51 into the measuring cell 51.

Then, the sweeping was carried out for 20 cycles in the manner that the potential (vsRHE) of the rotating disk electrode WE to the reference electrode RE was so-called "potential sweeping mode of chopping waves" where the potential (vsRHE) of the rotating disk electrode WE to the reference electrode RE was +85 mV to +1085 mV, and a scanning rate was 50 mv/sec.

[Evaluation of initial electrochemical area (ECSA)]

Next, the sweeping was carried out of in the manner that the potential (vsRHE) of the rotating disk electrode WE to the reference electrode RE was so-called "potential sweeping mode of rectangular waves" as shown in FIG.8.

More specifically, the potential sweeping where the following operations (A) to (D) were to be one cycle was carried out 6 cycles.

(A) Potential at the start of sweep: +600 mV, (B) Sweeping from +600 mV to +1000 mV, (C) Keeping at +1000 mV for 3 seconds, (D) Sweeping from +1000 mV to +600 mV, (E) Keeping at +600 mV for 3 seconds.

Next, the CV measurement was carried out for 3 cycles in the manner that the potential (vsRHE) of the rotating disk electrode WE was so-called "potential sweeping mode of chopping waves" where a potential at the start of measurement was +119 mV, +50 mV to +1200 mV, a scanning rate was 20 mv/sec. The rotation speed of the rotating disk electrode WE was 1600 rpm.

Next, after bubbling the electrolyte solution ES in the measuring cell 51 with an oxygen gas for 15 minutes or more, the CV measurement was carried out for 10 cycles under the condition of so-called "potential sweeping mode of chopping waves" where the scanning potential was +135 mV to +1085 mV vsRHE, a scanning rate was 10 mv/sec, and the rotation speed of the rotating disk electrode WE was 1600 rpm.

The current value at a potential of the rotating disk electrode of +900 mV vsRHE was recorded.

In addition, by setting the rotation speed of the rotating disk electrode WE at 400 rpm, 625 rpm, 900 rpm, 1225 rpm, 2025 rpm, 2500 rpm, and 3025 rpm, the oxygen reduction (ORR) current measurement was carried out by one cycle.

Utilizing the results obtained from the CV measurement, the Pt mass activity (Mass ACT) (mA/$\mu$g-Pt@0.9V) was calculated.

The results obtained in Example 1 to Example 7, Comparative Example 1 are shown in TABLE 1.

In TABLE 1, the Pt mass activities (Mass ACT) of Example 1 to Example 5, Comparative Example 2 are shown as a relative value when the Pt mass activity (Mass ACT) of Comparative Example 1 (Pt/ Pd / C catalyst) is 1.00.

(V) Evaluation test of durability of electrode catalyst

With respect to the rotating disk electrode WE that the catalyst layer CL containing the electrode catalyst of Example 1 to Example 7, and the rotating disk electrode WE that the catalyst layer CL containing the electrode catalyst of Comparative Example 1 to Comparative Example 5, the ECSA was measured by the RDE method in the following manner to evaluate the durability.

[Cleaning]

The same electrochemical treatment was carried out in the same manner as in the aforementioned evaluation test of the electrode catalyst.

(V-1) [Measurement of initial ECSA]

(i)Potential sweeping treatment

The sweeping was carried out of in the manner that the potential (vsRHE) of the rotating disk electrode WE to the reference electrode RE was so-called "potential sweeping mode of rectangular waves" as shown in FIG.6.

More specifically, the potential sweeping where the following operations (A) to (D) were to be one cycle was carried out 6 cycles.

(A) Potential at the start of sweep: +600 mV, (B) Sweeping from +600 mV to +1000 mV, (C) Keeping at +1000 mV for 3 seconds, (D) Sweeping from +1000 mV to +600 mV, (E) Keeping at +600 mV for 3 seconds.

(ii)CV measurement

Next, the CV measurement was carried out for 2 cycles in the manner that the potential (vsRHE) of the rotating disk electrode WE was so-called "potential sweeping mode of chopping waves" where a potential at the start of measurement was +119 mV, +50 mV to +1200 mV, a scanning rate was 50 mv/sec. The rotation speed of the rotating disk electrode WE was 1600 rpm.

From the result of the CV measurement of the second cycle, the initial ECSA value based on the hydrogen-attached and -detached waves was calculated. The results are shown in TABLE 1.

(V-2) [Measurement of ECSA after 12420 cycles of potential sweeping]

Continued to the measurement of the initial ECSA, the above "(i)Potential sweeping treatment" was achieved in the same conditions except that number of the potential sweepings was two cycles. Next, the above "(ii)CV measurement" was achieved in the same conditions.

As mentioned above, the "(i) Potential sweeping treatment" was achieved by changing the number of the potential sweepings in the order, and every after the measurement, the above "(ii)CV measurement" was achieved in the same conditions. The number of the potential sweepings was changed in the order of 22, 40, 80, 160, 300, 600, 800, 1000, 1000, 8400 cycles.

By the measurement, the value of ECSA obtained in the final "(ii)CV measurement" (value of ECSA after carrying out the potential sweeping treatment i.e. total number of the potential sweepings being 12420 cycles) was calculated.

Further, the maintenance rate (%) of ECSA was calculated by dividing the value of ECSA based on the hydrogen-attached and -detached waves obtained in the final "(ii)CV measurement" by the "value of initial ECSA".

The results obtained in Example 1 to Example 7, Comparative Example 1 are shown in TABLE 1.

In TABLE 1, the values of initial ECSA of Example 1 to Example 7, Comparative Example 1 are shown as a relative value when the value of initial ECSA of Comparative Example 1 (Pt/ Pd / C catalyst) is 1.00.

[TABLE 1]

| Example Com. Ex | Structure of catalyst particle | Surface of catalyst particle Results of XPS analysis | | | | | Whole of catalyst particle Results of ICP analysis | | | | Results of evaluation of properties | | Average particle size Results of XRD analysis |
|---|---|---|---|---|---|---|---|---|---|---|---|---|---|
| | | $R1_{Pt}$ /atm % | $R1_{Pd}$ /atm % | $R1_{Ti}$ /atm % | $R1_{Ti}/$ $(R1_{Ti}+R1_{Pt}+R1_{Pd})$ | $R1_{Ti}/$ $(R1_{Ti}+R1_{Pt})$ | $L_{Pt}$ /wt % | $L_{Pd}$ /wt % | $L_{Ti}$ /wt % | $L_{Pt}/L_{Pd}$ | Mass Act @0.9 vs. RHE Relative | ECSA maintenance rate after 12420 Relative | Catalyst particle /nm (220) |
| Com. EX. 1 | Pt/Pd/C | 43.77 | 56.23 | 0.00 | 0.00 | 0.00 | 8.64 | 29.50 | 0.00 | 0.29 | 1.00 | 1.00 | 19.6 |
| EX.1 | Pt/Pd+TiOx/C | 43.22 | 31.31 | 25.48 | 0.25 | 0.37 | 13.26 | 19.50 | 4.98 | 0.68 | 1.91 | 1.43 | 13.2 |
| EX.2 | Pt/Pd+TiOx/C | 46.14 | 35.77 | 18.09 | 0.18 | 0.28 | 14.43 | 19.70 | 4.76 | 0.73 | 1.56 | 1.45 | 11.0 |
| EX.3 | Pt/Pd+TiOx/C | 43.46 | 25.64 | 30.90 | 0.31 | 0.42 | 12.19 | 14.90 | 5.45 | 0.82 | 1.61 | 1.43 | 14.3 |
| EX.4 | Pt/Pd+TiOx/C | 34.57 | 26.85 | 38.58 | 0.39 | 0.53 | 10.86 | 17.20 | 8.07 | 0.63 | 2.16 | 1.41 | 29.4 |
| EX.5 | Pt/Pd+TiOx/C | 31.26 | 33.47 | 35.28 | 0.35 | 0.53 | 10.08 | 27.10 | 8.10 | 0.37 | 2.88 | 1.48 | 34.8 |
| EX.6 | Pt/Pd+TiOx/C | 34.04 | 17.83 | 48.13 | 0.48 | 0.59 | 6.79 | 9.44 | 8.77 | 0.72 | 3.04 | 1.31 | 16.2 |
| EX.7 | Pt/Pd+TiOx/C | 19.74 | 9.57 | 70.69 | 0.71 | 0.78 | 3.50 | 4.92 | 9.47 | 0.71 | 1.89 | 1.16 | 18.7 |

From the results of the Pt mass activity (Mass ACT) shown in TABLE 1, in comparison with the electrode catalyst (Pt / Pd / C catalyst) of Comparative Example 1, it was clear that the electrode catalysts [value of $\{R1_{Ti} / (R1_{Pt} + R1_{Pd} + R1_{Ti})\}$ being 0.15 to 0.75, value of $\{R1_{Ti} / (R1_{Pt} + R1_{Ti})\}$ being 0.25 to 0.80] of Example 1 to Example 7 had the same or more of the Pt mass activity.

More specifically, it was clear that the electrode catalysts of Example 1 to Example 7 had the Pt mass activity about 1.5 times to about 3 times in comparison with the electrode catalyst (Pt / Pd / C catalyst) of Comparative Example 1, and had an excellent catalyst activity.

Furthermore, it was clear that the electrode catalysts [value of $\{R1_{Ti} / (R1_{Pt} + R1_{Pd} + R1_{Ti})\}$ being 0.25 to 0.50, value of $\{R1_{Ti} / (R1_{Pt} + R1_{Ti})\}$ being 0.35 to 0.60] of Example 1, Example 2 to Example 6 had the Pt mass activity about 2 times to about 3 times in comparison with the electrode catalyst (Pt / Pd / C catalyst) of Comparative Example 1, and had an excellent catalyst activity.

Further, from the results of the "relative value of the maintenance rate of ECSA" obtained from the initial value of ECSA and the measured value of ECSA after 12420 cycles of the potential sweepings shown in TABLE 1, it was clear that the electrode catalysts [value of $\{R1_{Ti} / (R1_{Pt} + R1_{Pd} + R1_{Ti})\}$ being 0.15 to 0.50, value of $\{R1_{Ti} / (R1_{Pt} + R1_{Ti})\}$ being 0.25 to 0.60] of Example 1 to Example 6 had the same or more (about 1.3 times to about 1.5 times) of the value of ECSA after 12420 cycles of the potential sweepings and the maintenance rate of ECSA in comparison with the electrode catalyst (Pt / Pd / C catalyst) of Comparative Example 1, and had an excellent durability.

From the above results, it has been clear that the electrode catalysts of the present working examples had the same or more catalyst activity and durability in comparison with the Pt / Pd / C catalyst. Further, it has been clear that, according to the present invention, since the Ti oxide was used as a part of the materials of the core part, the amount of platinum to be used can be decreased, which contributes to low cost performance.

Applicability to Industries

The present invention can provide an electrode catalyst which has the same or more catalyst activity and durability and contributes to lowering of the cost in comparison with the Pt / Pd / C catalyst.

Accordingly, the present invention is a type of electrode catalyst that can be used not only in fuel-cell vehicles and electrical equipment industries such as those related to cellular mobiles, but also in Ene farms, cogeneration systems or the like, and thus, shall make contributions to the energy industries and developments related to environmental technologies.

Explanation of symbols

2: Support
3, 3a, 3b, 3c: Catalyst particle
4: Core part
5b, 5c, 5d: Intermediate shell part
6, 6a, 6b, 6c, 6d: Shell part
10, 10A, 10B, 10C: Electrode catalyst
40: Fuel cell stack 40
42: MEA
43: Anode
43a: Gas diffusion layer
43b: Catalyst layer
44: Cathode
45: Electrolyte membrane
46: Separator
48: Separator
50: Rotating disk electrode measuring machine
51: Measuring cell
52: Fixing member
53: Lubbin tube
CE: Counter electrode
CL: Catalyst layer
ES: Electrolyte solution
RE: Reference electrode

WE: Rotating disk electrode

**Claims**

1. An electrode catalyst comprises:

    an electrically conductive support, and
    catalyst particles supported on the support,
    wherein
    the catalyst particle comprises a core part formed on the support, and a shell part formed on the core part,
    the core part contains a Ti oxide and Pd, and
    the shell part contains Pt.

2. The electrode catalyst according to Claim 1, wherein a percentage $R1_{Pt}$ (atom %) of the Pt, a percentage $R1_{Pd}$ (atom %) of the Pd and a percentage $R1_{Ti}$ (atom %) of the Ti derived from the Ti oxide in an analytical region near a surface measured by X-ray photoelectron spectrum analysis (XPS) satisfy the conditions of the following equation (1).

$$0.15 \leq \{R1_{Ti} / (R1_{Pt} + R1_{Pd} + R1_{Ti})\} \leq 0.75 \qquad (1)$$

3. The electrode catalyst according to Claim 1, wherein a percentage $R1_{Pt}$ (atom %) of the Pt and a percentage $R1_{Ti}$ (atom %) of the Ti derived from the Ti oxide in an analytical region near a surface measured by X-ray photoelectron spectrum analysis (XPS) satisfy the conditions of the following equation (2).

$$0.25 \leq \{R1_{Ti} / (R1_{Pt} + R1_{Ti})\} \leq 0.80 \qquad (2)$$

4. The electrode catalyst according to Claim 2 or 3, wherein the $R1_{Pt}$ in the equation (1) or the equation (2) is 19 atom % or more.

5. The electrode catalyst according to Claim 2 or 4, wherein the $R1_{Pd}$ in the equation (1) is 36 atom % or less.

6. The electrode catalyst according to any one of Claims 2 to5, wherein the $R1_{Ti}$ in the equation (1) or the equation (2) is 18 atom % to 71 atom %.

7. The electrode catalyst according to any one of Claims 1 to 6, wherein a support rate $L_{Ti}$ (wt %) of Ti derived from the Ti oxide measured by ICP light emission analysis is 4.7.wt % or more.

8. The electrode catalyst according to any one of Claims 1 to 7, wherein a support rate $L_{Pt}$ (wt %) of Pt and a support rate $L_{Pd}$ (wt %) of Pd measured by ICP light emission analysis satisfy the conditions of the following equation (3).

$$L_{Pt} / L_{Pd} \geq 0.30 \qquad (3)$$

9. The electrode catalyst according to any one of Claims 1 to 8, wherein the catalyst particles has an intermediate shell part disposed between the core part and the shell part, and
   the intermediate shell part contains Pd.

10. The electrode catalyst according to any one of Claims 1 to 9, wherein the Ti oxide is exposed on a part of the surface of the catalyst particle.

11. The electrode catalyst according to any one of Claims 1 to 10, wherein an average value of crystallite size of the crystal particle measured by powder X-ray diffraction (XRD) is 3 to 35 nm.

12. A composition for forming gas diffusion electrode which comprises the electrode catalyst according to any one of Claims 1 to 11.

**13.** A gas diffusion electrode which comprises the electrode catalyst according to any one of Claims 1 to 11, or which is formed by using the composition for forming gas diffusion electrode which comprises the electrode catalyst according to Claim 12.

**14.** A membrane-electrode assembly (MEA) comprising the gas diffusion electrode according to Claim 13.

**15.** A fuel cell stack comprising the membrane-electrode assembly (MEA) according to Claim 14.

FIG.1

10  Electrode catalyst

6  Shell part
4  Core part
3  Catalyst particle

2  Support

FIG.2

10A Electrode catalyst

6a Shell part

4s Exposed surface of core part

3a Catalyst particle

6a Shell part

4 Core part

2 Support

FIG.3

10B Electrode catalyst

6b Shell part
5b Intermediate shell part — 3b Catalyst particle
4 Core part

2 Support

FIG.4

10C Electrode catalyst

6c Shell part

5c Intermediate shell part

4s Exposed surface of core part

5s Exposed surface of
intermediate shell part

5d Intermediate shell part

6d Shell part

4 Core part

3c Catalyst particle

2 Support

FIG.5

30  XPS analyzer

36 Analyzer

32  X-ray source

θ=75 °
Photoelectron taking out angle

SD Measuring depth
(Escaping depth)

34  Sample stage

FIG.6

FIG.7

FIG.8

## INTERNATIONAL SEARCH REPORT

| | International application No. |
|---|---|
| | PCT/JP2017/002386 |

**A. CLASSIFICATION OF SUBJECT MATTER**
*H01M4/92*(2006.01)i, *B01J23/44*(2006.01)i, *B01J35/08*(2006.01)i, *H01M4/86*(2006.01)i, *H01M8/10*(2016.01)n

According to International Patent Classification (IPC) or to both national classification and IPC

**B. FIELDS SEARCHED**

Minimum documentation searched (classification system followed by classification symbols)
H01M4/86-4/98, B01J21/00-38/74, H01M8/00-8/0297, H01M8/08-8/2495, H01M12/00-16/00, H01G9/20

Documentation searched other than minimum documentation to the extent that such documents are included in the fields searched
Jitsuyo Shinan Koho      1922-1996   Jitsuyo Shinan Toroku Koho   1996-2017
Kokai Jitsuyo Shinan Koho   1971-2017   Toroku Jitsuyo Shinan Koho   1994-2017

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2014-209484 A  (University of Miyazaki), 06 November 2014 (06.11.2014), (Family: none) | 1-15 |
| A | JP 2013-80683 A  (Nissan Motor Co., Ltd.), 02 May 2013 (02.05.2013), (Family: none) | 1-15 |
| A | JP 2014-514956 A  (Toyota Motor Europe N.V./S.A.), 26 June 2014 (26.06.2014), & US 2014/0193746 A1    & WO 2013/013704 A1 | 1-15 |
| A | JP 2011-162879 A  (Robert Bosch GmbH), 25 August 2011 (25.08.2011), & DE 102010001567 A1    & CN 102148068 A | 1-15 |

☒ Further documents are listed in the continuation of Box C.   ☐ See patent family annex.

| | |
|---|---|
| * Special categories of cited documents: <br> "A" document defining the general state of the art which is not considered to be of particular relevance <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
|---|---|
| 07 April 2017 (07.04.17) | 18 April 2017 (18.04.17) |

| Name and mailing address of the ISA/ <br> Japan Patent Office <br> 3-4-3,Kasumigaseki,Chiyoda-ku, <br> Tokyo 100-8915,Japan | Authorized officer <br><br> Telephone No. |

Form PCT/ISA/210 (second sheet) (January 2015)

**INTERNATIONAL SEARCH REPORT**

International application No.

PCT/JP2017/002386

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2015-534244 A (Audi AG.), 26 November 2015 (26.11.2015), & US 2015/0255798 A1    & WO 2014/065777 A1 | 1-15 |
| A | JP 2011-72981 A (Sony Corp.), 14 April 2011 (14.04.2011), & US 2011/0200915 A1    & WO 2010/050550 A1 & EP 2351614 A1 | 1-15 |
| A | JP 2012-143753 A (Samsung Electronics Co., Ltd.), 02 August 2012 (02.08.2012), & US 2012/0183869 A1 | 1-15 |
| A | JP 2013-127869 A (University of Miyazaki), 27 June 2013 (27.06.2013), (Family: none) | 1-15 |
| A | JP 2012-120949 A (Toyota Motor Corp.), 28 June 2012 (28.06.2012), (Family: none) | 1-15 |
| A | JP 2009-510705 A (Brookhaven Science Associates), 12 March 2009 (12.03.2009), & US 2007/0026292 A1 | 1-15 |
| A | JP 2010-537033 A (BASF SE), 02 December 2010 (02.12.2010), & US 2010/0311572 A1    & WO 2009/027432 A1 | 1-15 |
| A | WO 2014/069208 A1 (the Doshisha), 08 May 2014 (08.05.2014), (Family: none) | 1-15 |
| A | US 2015/0333337 A1 (ILIKA TECHNOLOGIES LTD.), 19 November 2015 (19.11.2015), & WO 2014/111715 A1 | 1-15 |
| A | US 2015/0372316 A1 (ILIKA TECHNOLOGIES LTD.), 24 December 2015 (24.12.2015), & WO 2014/111716 A1 | 1-15 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 200731722 B
- JP 2012143753 A
- JP 2008545604 A
- JP 2010501345 A
- JP 2012081391 A